# EUROPÄISCHE PATENTSCHRIFT

(11) **EP 4 185 512 B1**
(45) Veröffentlichungstag und Bekanntmachung des Hinweises auf die Patenterteilung: **22.05.2024**
(21) Anmeldenummer: 21748593.7
(22) Anmeldetag: 21.07.2021
(51) Int. Cl.: B62D 7/14

(54) **HYDRAULISCHE HINTERACHSLENKUNG**
HYDRAULIC REAR AXLE STEERING
DIRECTION HYDRAULIQUE D'ESSIEU ARRIÈRE

(30) Priorität: 21.07.2020 DE 102020119239; 20.10.2020 DE 102020127621
(43) Veröffentlichungstag der Anmeldung: 31.05.2023
(73) Patentinhaber: Weber-Hydraulik GmbH, 74363 Güglingen (DE)
(72) Erfinder: WINKLER, Torsten, 74397 Pfaffenhofen (DE)
(74) Vertreter: LBP Lemcke, Brommer & Partner Patentanwälte mbB
(86) Internationale Anmeldenummer: PCT/EP2021/070387
(87) Internationale Veröffentlichungsnummer: WO 2022/018135

(56) Entgegenhaltungen:
- EP-A1- 0 225 773
- EP-A1- 3 483 039
- WO-A1-2016/193091

## Beschreibung

Die vorliegende Erfindung betrifft eine hydraulische Hinterachslenkung für mehrachsige Fahrzeuge, mit einem Lenkzylinder, der einen Zylinderraum, einen dichtend in dem Zylinderraum gelagerten Kolben, der den Zylinderraum in zwei Arbeitsräume unterteilt, und mindestens eine von dem Kolben getragene Kolbenstange umfasst, wobei der Lenkzylinder mit einer mechanischen Sperrvorrichtung versehen ist, die den Kolben bei Erreichen einer Mittelstellung innerhalb des Lenkzylinders arretiert.

Schwere Fahrzeuge, insbesondere Nutzfahrzeuge für den Transport großer Lasten, Mobilkräne, elektrische Nutzfahrzeuge oder Busse, verfügen oft über mehr als zwei Hinterachsen. Hierbei kann es sich prinzipiell um Vorlauf- oder Nachlaufachsen handeln, also Achsen, die vor oder hinter einer angetriebenen Starrachse angeordnet sind. Beide Anordnungen dienen der Entlastung der angetriebenen Starrachse und ermöglichen somit eine höhere Nutzlast des Fahrzeugs.

Um die Manövrierfähigkeit eines derartigen Fahrzeugs zu erhöhen und gleichzeitig den Verschleiß von Reifen und Straßenbelag zu reduzieren, werden diese zusätzlichen Fahrzeugachsen nicht starr ausgeführt, sondern als Lenkachsen, die im Regelfall der Auslenkung nach der Ackermann-Geometrie folgen. Diese geometrische Anordnung führt dazu, dass alle Räder auf unterschiedlichen Kreisbahnen abrollen und die zugehörten Radachsen beim Einlenken einen gemeinsamen Mittelpunkt haben.

Gelenkte Hinterachsen können zwangsgelenkt oder adhäsionsgelenkt ausgeführt werden. Bei einer adhäsionsgelenkten Hinterachse wird diese mit einem konstruktiven Nachlauf versehen, sodass die Auslenkung und Rückstellbewegung der Räder aufgrund der Reibung auf der Straße selbstlenkend erfolgt. Bei einer zwangsgelenkten Hinterachse wird die Hinterachslenkung über einen Hydraulikzylinder mit dem Chassis verbunden. Die Aktivierung erfolgt hierbei über eine Motorpumpeneinheit, die das jeweils zur Lenkbewegung notwendige Ölvolumen aus einem Vorratstank in die jeweilige Zylinderkammer des Hydraulikzylinders fördert. Hierbei kann eine bidirektionale Pumpe zum Einsatz kommen, welche abhängig von der Drehrichtung den einen oder anderen Zylinderraum mit Hydraulikflüssigkeit beaufschlagt. Weiterhin können über sogenannte Lasthalteventile oder entsperrbare Rückschlagventile die beiden Zylinderräume zum Tank hin gesichert werden, sodass bei Deaktivierung des Elektromotors das Hydrauliköl weiterhin in der jeweiligen Kammer des Zylinders verbleibt und somit dessen Position beibehalten wird.

Wesentlich bei zwangsgelenkten Hinterachsen ist, dass im Falle eines Fehlers oder eines Ausfalls der Hinterachslenkung, insbesondere bei Ausfall der elektrischen Energieversorgung, das Fahrzeug weiterhin beherrschbar bleibt. Hierzu wird die Hinterachslenkung im Fehlerfall in einen sicheren Ausfallzustand gebracht, bei dem die Räder in Geradeausstellung stehen, die Lenkung somit in Mittelstellung zentriert ist. Entsprechende Lenksysteme sind beispielsweise aus der DE 10 2012 105 976 A1, der DE 10 2014 113 880 A1 und der DE 10 2015 109 513 A1 bekannt.

Um den gewünschten sicheren Fahrzustand zu erreichen, muss die Lenkung im Falle eines Fehlers ohne jeglichen weiteren Eingriff des Fahrers oder elektrischer Stell- und Regelgrößen ausschließlich über das Wirkprinzip der Adhäsion zurück zur Mittelstellung bewegt werden. Hierzu sind verschiedene Ventilschaltungen implementiert worden, die dafür sorgen, dass externe Kräfte, die in den Lenkzylinder eingeleitet werden, ausschließlich zu einer Bewegung zur Mittelposition des Lenkzylinders führen können. Nachteile der im Stand der Technik beschriebenen Ventilanordnungen bestehen darin, dass im Falle eines Defektes einer Hydraulikleitung Hydraulikflüssigkeit austreten und Luft angesaugt werden kann, wodurch die Steifigkeit des Lenkzylinders aufgrund der Kompressibilität der eingedrungenen Luft negativ beeinflusst wird. Außerdem kann bei einem ÖIverlust durch Versagen von Dichtungen im Lenkzylinder die sichere Neutralposition ebenfalls nicht mehr eingehalten werden.

Eine Hinterachslenkung mit einer mechanischen Sperrvorrichtung ist in der EP 0 225 773 A1 beschrieben. Als Sperrglieder besitzt die Sperrvorrichtung mehrere umfangsverteilte Kugeln, die in eine Ringnut des Kolbens einrasten, wenn dieser sich in seiner Mittelstellung befindet, und in gesperrtem Zustand von einer Verriegelungshülse in ihrer Einrastposition gehalten werden. Die Verriegelungshülse ist über eine Feder in Richtung ihrer Sperrstellung vorgespannt und kann über einen separaten Druckraum hydraulisch gegen die Kraft der Feder in ihre Entsperrstellung, in welcher sie die Sperrkugeln freigibt, verstellt bzw. in dieser gehalten werden. Bei Druckverlust wird über die Verriegelungshülse außerdem ein Ventil geöffnet, welches eine direkte Verbindung zwischen den Zylinderräumen schaltet, sodass der Kolben frei bewegt werden kann. Nachteilig an der mechanischen Sperrvorrichtung ist, dass diese verschleißanfällig ist, da der Kolben bei Ausfall der Lenkung ausschließlich durch die Sperrkugeln in Mittelstellung gehalten wird. Bei Ausfall der Lenkung ist auch nicht sichergestellt, dass die Lenkung sich nur in Richtung der Mittelstellung bewegen lässt. Außerdem neigt die Sperrvorrichtung zum Verklemmen, wenn nach einem Entsperren die Sperrkugeln noch nicht vollständig freigegeben sind und am Lenkzylinder bereits ein hydraulischer Druck anliegt.

Eine Aufgabe der Erfindung besteht darin, eine hydraulische Hinterachslenkung anzugeben, mit der einerseits auch bei komplettem Verlust des Hydraulikmediums eine sichere Ausfallposition erreicht und sicher beibehalten werden kann, welche anderseits die Nachteile der bekannten mechanischen Sperrvorrichtung vermeidet.

Die Aufgabe wird gelöst durch die Merkmale des Anspruchs 1. Vorteilhafte Ausgestaltungen sind den abhängigen Ansprüchen zu entnehmen.

Bei einem Lenksystem der eingangs genannten Art ist erfindungsgemäß vorgesehen, dass von jedem der beiden Arbeitsräume jeweils eine Rückleitung zu einem Tank führt und in jeder der Rückleitungen ein hydraulisch entsperrbares Ventil, insbesondere ein Lasthalteventil angeordnet ist, dass die hydraulisch entsperrbaren Ventile als vordruckgesteuerte Ventile ausgebildet sind, deren Steueranschluss jeweils mit einer von einer Pumpe zu dem jeweils anderen Arbeitsraum führenden Druckleitung verbunden ist, und dass der hydraulisch betätigte Aktuator so eingestellt ist, dass er bei Anliegen eines ersten Druckwerts das Verriegelungselement in die Entsperrstellung verstellt und die vordruckgesteuerten Ventile so eingestellt sind, dass sie bei Anliegen eines zweiten Druckwertes am Steueranschluss öffnen, wobei der zweite Druckwert höher als der erste Druckwert ist.

Die im Fehlerfalle gesperrten Lasthalteventile tragen dazu bei, dass der Lenkzylinder nach Erreichen der Mittelstellung nicht nur mechanisch, sondern auch hydraulisch gesperrt ist, sodass die auf die Lenkung wirkenden Kräfte nicht ausschließlich von der mechanischen Sperrvorrichtung aufgenommen werden müssen. Zudem besteht eine Redundanz durch die mechanische und hydraulische Sperrung des Lenkzylinders, die zu einer erhöhten Sicherheit gegen ein Versagen der Lenkung beiträgt, die Lenkung also bei Ausfall in jedem Falle in einen sicheren Ausfallzustand gelangt. Schließlich wird durch die gestaffelten Schaltdrücke, mit denen der hydraulisch betätigte Aktuator und die Lasthalteventile schalten, erreicht, dass nach einem Entsperren der Lenkung zuerst die mechanische Sperrvorrichtung sicher entriegelt, bevor durch Öffnen eines der Lasthalteventile eine Bewegung des Kolbens einsetzen kann. Somit ist die Gefahr eines Verklemmens der mechanischen Sperrvorrichtung aufgrund eines unter Druck stehenden Kolbens reduziert. Sofern auf eine Überdruckabsicherung verzichtet werden soll, die ein Lasthalteventil mit sich bringt, können anstelle von Lasthalteventile auch hydraulisch entsperrbare Rückschlagventile eingesetzt werden.

Die Sperrvorrichtung des Lenksystems weist mindestens ein Sperrglied auf, welches in gesperrtem Zustand von einem Verriegelungselement in einer Einrastposition gehalten wird, und das Verriegelungselement ist über einen von Kolben und Kolbenstange separaten, hydraulisch betätigten Aktuator zwischen einer Sperrstellung, in der das Verriegelungselement das Sperrglied in der Einrastposition hält, und mindestens einer ersten Entsperrstellung, in der das Verriegelungselement das Sperrglied freigibt, verstellbar.

Bei dem Aktuator zur Betätigung des Verriegelungselements handelt es sich um ein zusätzliches, von Kolben und Kolbenstange des Lenkzylinders separates Bauteil, welches jedoch vorzugsweise in den Lenkzylinder integriert sein kann. Das Verriegelungselement ist ebenfalls ein separates, von der Funktion des Lenkzylinders getrenntes aber vorzugsweise in diesen integriertes Bauteil, welches unabhängig von der Kolbenstange, jedoch vorzugsweise nur in deren Mittelposition, verstellbar ist.

Bevorzugt kann die Lenkung ein als Magnetventil ausgeführtes, stromlos geöffnetes Absperrventil aufweisen, welches im Normalbetrieb der Hinterachslenkung eine hydraulische Verbindung zwischen den Arbeitsräumen oder zu einer Tankrückleitung sperrt und zur Deaktivierung der Hinterachslenkung oder im Fehlerfall stromlos geschaltet wird und die unidirektionale hydraulische Verbindung zwischen den Arbeitsräumen bzw. die Tankrückleitung freigibt.

Das Absperrventil kann einerseits zur Deaktivierung über ein Steuergerät stromlos geschaltet und somit geöffnet werden, wenn eine Deaktivierung der Hinterachslenkung beispielsweise bei höheren Geschwindigkeiten gewünscht ist. Anderseits wird die Sicherheitsschaltung zur Zentrierung der Hinterachslenkung bei einem Defekt, der zu einem Ausfall der Stromversorgung führt, automatisch aktiviert, indem das Absperrventil selbsttätig öffnet.

Des Weiteren ist es vorteilhaft, wenn das Sperrglied der Sperrvorrichtung mit einer Ausnehmung, welche die Einrastposition für das Sperrglied bildet, mit Spiel in Eingriff steht, indem die Ausnehmung gegenüber dem Sperrglied ein Übermaß aufweist. Das Übermaß ist dabei so bemessen, dass ein sich aufgrund des Übermaßes ergebender Lenkausschlag kleiner als ein vorgegebener, maximal zulässiger Winkelfehler ist. Beispielsweise kann für die Radstellung der gelenkten Hinterachse im Fehlerfall ein Winkelfehler von +/-1° tolerierbar sein, der die Beherrschbarkeit des Fahrzeugs nicht nachhaltig negativ beeinflusst. Resultierend aus dem Winkelfehler und der Kinematik über welche der Lenkzylinder mit der Achse verbunden ist ergibt sich resultierend aus dem tolerierbaren Winkelfehler am Rad ein zugehöriges Axialspiel des Sperrglieds in der Einrastposition von beispielsweise 2 mm.

Der Vorteil eines gewissen Spiels in der Einrastposition besteht darin, dass die Lenkung bei der Montage des Fahrzeugs zunächst mechanisch nur grob voreingestellt werden muss. Die genaue Geradeausstellung, die durch eine Achsvermessung ermittelt wird, kann dann als eine zugehörige Kolbenstellung in einem Steuergerät des Lenksystems hinterlegt werden, d.h. eine Justierung des Geradeauslaufs der Lenkung kann rein softwaretechnisch erfolgen. Hierbei muss die Grobeinstellung der Lenkung bei der Montage ausreichend genau sein, sodass die Kolbenstellung, die dem Geradeauslauf entspricht, innerhalb des Spiels in der Einrastposition liegt.

Die vorstehend erläuterte Sperrvorrichtung zur mechanischen Arretierung mit Spiel kann in Kombination mit einer hydraulischen Sperrung des Lenkzylinders grundsätzlich unabhängig von der hier beanspruchten Staffelung der Schaltdrücke, mit denen der hydraulisch betätigte Aktuator und die Lasthalteventile schalten, eingesetzt werden, und stellt daher eine unabhängige Erfindung dar. Beispielsweise kann auf andere Weise als durch Staffelung der Schaltdrücke sichergestellt werden, dass die mechanische Sperrvorrichtung entsperrt ist, bevor eine hydraulische Ansteuerung des Lenkzylinders erfolgt, etwa indem die Sperrvorrichtung durch einen von der Hydraulik des Lenksystems unabhängigen (elektrischen oder hydraulischen) Aktuator betätigt wird und eine Entsperrung durch das Steuergerät sichergestellt wird.

Bei einer bevorzugten Ausführungsform weist die Lenkung außerdem mindestens ein mechanisch schaltbares Ventil auf, welches mit dem Verriegelungselement oder der Kolbenstange mechanisch gekoppelt ist. Mit einem derartigen Ventil kann in Abhängigkeit der Stellung des Verriegelungselements oder der Kolbenstange ein Hydraulikmittelfluss zwischen den Arbeitsräumen des Lenkzylinders oder von den Arbeitsräumen des Lenkzylinders zu einem Tank gesteuert werden.

Ist der Lenkzylinder als Gleichgangzylinder ausgeführt, so kann eine Rückstellung in die Mittellage erfolgen, indem Hydraulikflüssigkeit über eine vorzugsweise unidirektionale Verbindung zwischen den Arbeitsräumen direkt von dem einen in den anderen Arbeitsraum geleitet wird. Eine Rückstellung des Kolbens in die Mittellage kann alternativ auch durch eine Entlastung jeweils eines der Arbeitsräume zum Tank hin realisiert werden. In diesem Falle kann der Lenkzylinder auch als Differentialzylinder ausgeführt sein.

Bei einer ersten Ausführungsform kann vorgesehen sein, dass das mechanisch schaltbare Ventil als Umschaltventil mit drei Schaltstellungen ausgebildet ist, zwischen denen es über einen umgestalteten Bereich der Kolbenstange in Abhängigkeit der Kolbenposition geschaltet wird, wobei das Ventil in einer ersten Schaltstellung den einen der Arbeitsräume mit der Tankrückleitung verbindet, in einer zweiten Schaltstellung die Verbindung zwischen beiden Arbeitsräumen und der Tankrückleitung sperrt und in einer dritten Schaltstellung den anderen Arbeitsraum mit der Tankrückleitung verbindet.

Wird einer der Arbeitsräume zur Deaktivierung zum Tank hin entlastet, so kann der Kolben in den betreffenden Arbeitsraum einfahren und die dort vorhandene Hydraulikflüssigkeit verdrängen. In den anderen Arbeitsraum kann dann, insbesondere über ein zum Tank hin sperrendes weiteres Rückschlagventil, Hydraulikflüssigkeit aus dem Tank angesaugt werden, um einen in dem Arbeitsraum anderenfalls auftretenden Unterdruck auszugleichen. Die zum Tank führende Leitung mit dem zum Tank hin sperrenden Rückschlagventil kann insbesondere in eine zur Pumpe führende Druckleitung einmünden, über die bei entsprechender Lenkbetätigung auch Hydraulikmittel in Richtung des betreffenden Arbeitsraums gefördert würde.

Auf diese Weise kann je nach Auslenkung der Kolbenstange sichergestellt werden, dass der Kolben nur in Richtung der Mittelstellung bewegt werden kann. In der Mittelstellung wird die zweite Schaltstellung eingenommen, in der keiner der Arbeitsräume zur Tankrückleitung hin entlastet ist, sodass der Lenkzylinder hydraulisch gesperrt bleibt.

Bei einer anderen Ausführungsform umfasst die Ventilanordnung zwei mechanisch schaltbare Ventile, insbesondere mechanisch entsperrbare Rückschlagventile, wobei das Verriegelungselement zwischen der ersten Entsperrstellung, der Sperrstellung und einer zweiten Entsperrstellung verstellbar ist und ein erstes der Ventile von dem Aktuator geschaltet wird, wenn das Verriegelungselement in die erste Entsperrstellung verstellt wird und ein zweites der Ventile vom Aktuator geschaltet wird, wenn das Verriegelungselement in die zweite Entsperrstellung verstellt wird.

Auf diese Weise kann die Steuerung einer Ventilanordnung realisiert werden, die in Abhängigkeit der Lenkstellung des Lenkzylinders eine unidirektionale hydraulische Verbindung zwischen den Arbeitsräumen des Lenkzylinders schaltet, derart, dass der Kolben ebenfalls nur zu seiner Mittelstellung hin bewegbar ist. Eine Integration der Ventile kann bevorzugt in einem Endstück des Lenkzylinders erfolgen.

Ebenso kann vorgesehen sein, dass die Ventilanordnung zwei wechselweise entsperrbare (Rückschlag-)Ventile umfasst, die in je einer von jeweils einem der Arbeitsräume zu dem Tank führenden Entlastungsleitung angeordnet sind. Die Ventilanordnung bewirkt in diesem Fall eine wahlweise Freischaltung der Entlastungsleitungen.

Besonders bevorzugt ist hierbei, wenn die mechanisch entsperrbaren Rückschlagventile in den Lenkzylinder baulich integriert sind. Dies führt nicht nur zu einem besonders kompakten Aufbau, sondern erhöht auch die Ausfallsicherheit, da die empfindlichen Ventile integriert in dem Lenkzylinder vor äußeren mechanischen Einflüssen und Eindringen von Feuchtigkeit und Schmutz geschützt sind und weiterhin auch bei Versagen der Schlauchverbindung zwischen Lenkzylinder und Druckversorgungseinheit die Funktion sichergestellt bleibt.

Die Entlastungsleitungen können vorzugsweise zu dem Absperrventil und von dort weiter zu dem Tank führen. Hierbei können die Entlastungsleitungen insbesondere über in Richtung Tank öffnende Rückschlagventile oder über ein Wechselventil mit dem Absperrventil verbunden sein. Diese verhindern, dass Hydraulikflüssigkeit von einem Arbeitsraum statt zum Tank in Richtung des anderen Arbeitsraums fließen kann. Mit anderen Worten sorgen Rückschlagventile bzw. ein Wechselventil dafür, dass keine direkte Verbindung zwischen den Arbeitsräumen besteht.

Im Rahmen der Erfindung ist zweckmäßigerweise vorgesehen, dass das Verriegelungselement mittels einer oder mehrerer Rückstellfedern in Richtung seiner Sperrstellung federbelastet ist. Ohne eine externe Kraft eines Aktuators bzw. bei Ausfall desselben, kehrt das Verrieglungselement somit unter Einwirkung der Rückstellfeder(n) bei Erreichen der Mittelstellung des Kolbens selbsttätig in seine Sperrstellung zurück, in welcher das Sperrglied in der Einrastposition gehalten wird und der Kolben somit in der Mittelstellung arretiert ist.

Eine Verstellung des Verriegelungselements außerhalb der Mittelstellung kann grundsätzlich durch jede Art von Rast- oder Klinkenmechanismus erfolgen und unabhängig von der Stellung des Sperrglieds sein, welches den Kolben in seiner Mittelstellung einrastet. Bei einer bevorzugten Ausführungsform der Erfindung ist jedoch vorgesehen, dass eine Verstellung des Verriegelungselements außerhalb der Mittelstellung des Kolbens durch das in seiner den Kolben freigebenden Stellung befindliche Sperrglied blockiert wird. Eine Blockierung des Verriegelungselements außerhalb der Mittelstellung erfolgt somit durch denselben Rastmechanismus, welcher in der Mittelstellung den Kolben arretiert.

Bei einer bevorzugten Ausführungsform weist die Kolbenstange einen sich durch den Kolben erstreckenden Hohlraum auf und die Sperrvorrichtung ist innerhalb des Hohlraums der Kolbenstange angeordnet. Hierdurch ergibt sich einerseits eine besonders kompakte Bauform, andererseits ist die Sperrvorrichtung vor äu-ßeren Einflüssen und Verschmutzung geschützt, wodurch der Lenkzylinder besonders robust ausgeführt werden kann.

Hierbei kann insbesondere ein von einem Endstück des Lenkzylinders in dessen Zylinderraum ragendes Innenrohr vorgesehen sein, das sich bis in den Hohlraum der Kolbenstange erstreckt.

Das Verriegelungselement kann als eine innerhalb des Innenrohres längsbewegliche Hülse ausgebildet sein, die in einem Endbereich einen als Verriegelungsraste dienenden Ringwulst trägt, welcher in der Sperrstellung das mindestens eine Sperrglied in der Einrastposition hält.

Grundsätzlich können als Sperrglieder unterschiedliche Arten von Sperrkörpern eingesetzt werden, wie etwa Klinken, Rasten, Rollen, Segmentkörper, Keile, etc. und sind im Rahmen der vorliegenden Erfindung mit umfasst.

Bei einer weiteren bevorzugten Weiterbildung dienen als Sperrglieder eine Mehrzahl umfangsverteilt angeordneter Federzungen, die an ihrem Ende jeweils eine Rastnase tragen, welche in eine Ausnehmung, insbesondere eine Ringnut an der Innenseite des Hohlraums der Kolbenstange einrasten. Die Federzungen können hierbei insbesondere am Ende des besagten, in den Zylinderraum ragendes Innenrohres angeordnet sein und mit diesem zusammen eine Art Spannzange bilden.

Bei einer alternativen Ausführung dienen als Sperrglieder eine Mehrzahl umfangsverteilt angeordneter Sperrkugeln, die in eine Ringnut an der Innenseite des Hohlraums der Kolbenstange einrasten. Die Ausbildung der Sperrvorrichtung als Kugelgesperre führt zu einer besonders robusten Anordnung, bei der insbesondere Fehlfunktionen durch Verklemmen einzelner Sperrglieder weitgehend ausgeschlossen ist.

Des Weiteren ist es vorteilhaft, wenn die Lasthalteventile zusätzlich als Überdruckventile ausgebildet sind, die bei Überschreiten eines an einem mit dem jeweiligen Arbeitsraum verbundenen Mediumanschluss anliegenden Maximaldruckwertes öffnen, wobei der Maximaldruckwert über dem ersten und dem zweiten Druckwert liegt. Somit werden gefährliche Druckverhältnisse im Lenksystem, die zu einer Beschädigung oder einem Versagen führen könnten, vermieden. Ein gefährlicher Überdruck kann beispielsweise aufgrund einer von den Rädern auf den Lenkzylinder ausgeübten Kraft bei einer harten Bordsteinberührung auftreten. Die Überdruckentlastung über die Lasthalteventile schützt hierbei die Mechanik der Achse sowie die Mechanik des Lenkzylinders und somit die gesamte Hydrauliklenkung vor Schäden durch Überlastung. Dies ist der Vorteil gegenüber den alternativ aufgeführten, hydraulisch entsperrbaren Rückschlagventilen, die bis auf die Ausnahme einer Überdruckentlastung ansonsten eine identische Funktion des Systems ermöglichen.

Bei einer anderen bevorzugten Ausführungsform ist die Pumpe, mit der die Arbeitsräume des Lenkzylinders zwecks Auslenkung des Kolbens in die eine oder die andere Richtung wahlweise mit einem Hydraulikmedium druckbeaufschlagt werden, als reversierbare Pumpe ausgebildet, die zur Auslenkung des Kolbens in unterschiedliche Richtungen in entgegengesetztem Drehsinn angetrieben wird. Somit lässt sich durch einfache Umkehrung der Drehrichtung die Lenkrichtung steuern, sodass auf zusätzliche aufwändige Umschaltventile zur Steuerung des Fluidstroms verzichtet werden kann.

Im Rahmen der Erfindung kann zweckmäßigerweise ein Steuergerät zur Ansteuerung von Pumpe und Ventilanordnung zum Einsatz kommen. Hierbei ist es insbesondere mit vorgenanntem Kugelgesperre besonders vorteilhaft, wenn das Steuergerät so ausgebildet ist, dass beim Ausführen einer Lenkbewegung über die Mittelstellung des Lenkzylinders hinweg bei Erreichen der Mittelstellung der Hydraulikmittelzufluss von der Pumpe kurzzeitig gedrosselt oder gestoppt wird. Hierdurch wird sichergestellt, dass den Sperrgliedern, die außerhalb der Mittelstellung eine Verstellung des Verriegelungselements blockieren, in der Mittelstellung ausreichend Zeit gegeben wird, in ihre Einrastposition auszuweichen, in welcher der Kolben gesperrt, eine Verstellung des Sperrglieds jedoch freigegeben ist. Eine Fehlfunktion durch Verklemmen oder Hemmung der Sperrglieder wird hierdurch vermieden.

Weitere Vorteile und Ausgestaltungen der Erfindung ergeben sich anhand der nachfolgenden Beschreibung von Ausführungsbeispielen anhand der Figuren. Es zeigt:
- Figur 1:: ein erstes Ausführungsbeispiel eines Lenksystems in einem in Mittelstellung arretierten Zustand,
- Figur 2: das Lenksystem aus Figur 1 in einer Lenkstellung mit ausgefahrener Kolbenstange,
- Figur 3: den Lenkzylinder aus Figur 1 in einer Lenkstellung mit eingefahrener Kolbenstange,
- Figur 4:: ein zweites Ausführungsbeispiel eines Lenkzylinders mit zugehöriger Ventilschaltung in einem in Mittelstellung arretierten Zustand,
- Figur 5: den Lenkzylinder aus Figur 4 in einer Lenkstellung mit eingefahrener Kolbenstange,
- Figur 6: den Lenkzylinder aus Figur 4 in einer Lenkstellung mit ausgefahrener Kolbenstange und
- Figur 7:: ein drittes Ausführungsbeispiel eines Lenkzylinders mit zugehöriger Ventilschaltung in einem in Mittelstellung arretierten Zustand.

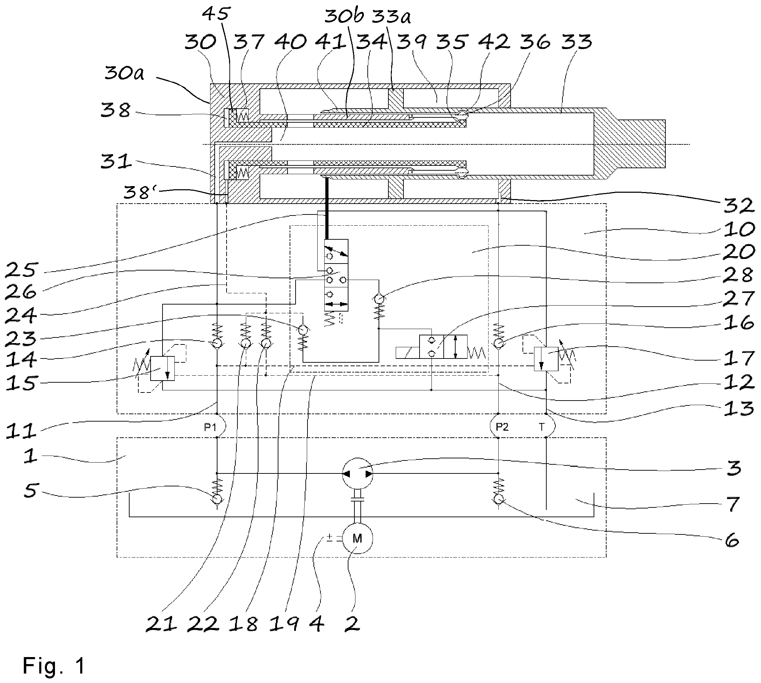

Ein erstes Ausführungsbeispiel einer Hinterachslenkung ist schematisch in den Figuren 1 bis 3 dargestellt. Eine Druckversorgungseinheit 1 versorgt über einen Ventilblock 10, der wiederum eine Sicherheitsschaltung 20 beinhaltet, einen Lenkzylinder (Hydraulikzylinder) 30 mit Hydrauliköl. Die Druckversorgungseinheit 1 umfasst eine reversierbare Pumpe 3, die von einem elektrischen Antriebsmotor 2 angetrieben wird. Der elektrische Anschluss 4 des Antriebsmotors 2 wird über ein in Figur 1 nicht dargestelltes Steuergerät gesteuert. Je nach Ansteuerung des Antriebsmotors 2 dreht dieser die Pumpe 3 in die eine oder andere Richtung.

Die Pumpe 3 besitzt zwei Hydraulikanschlüsse, die je nach Drehrichtung wahlweise als Saug- und als Druckanschluss arbeiten. Der Hydraulikanschluss, welcher jeweils als Sauganschluss arbeitet, saugt über ein entsprechendes Rückschlagventil 5, 6 Hydraulikmittel aus einem Tank 7 an, welches über den jeweils anderen Hydraulikanschluss der Pumpe 3 in Richtung des angeschlossenen Verbrauchers, hier also des Lenkzylinders 30, gefördert wird.

Über entsprechende Anschlüsse P1, P2 sind die von der Pumpe 3 kommenden Hydraulikleitungen mit dem Ventilblock 10 verbunden. Jeder der Anschlüsse P1, P2 führt jeweils über eine Hydraulikleitung, die Druckleitungen 11, 12, und ein Rückschlagventil 14, 16 zu einem der Druckanschlüsse 31, 32 des Lenkzylinders 30. In der Rückrichtung ist jeder der Druckanschlüsse 31, 32 des Lenkzylinders 30 über ein Lasthalteventil 15, 17 mit einer Tankrückleitung 13 verbunden, die zurück in den Tank 7 führt. Die Lasthalteventile 15, 17 sind vordruckgesteuerte Ventile, deren Steuereingang über Pilotleitungen 18, 19 über Kreuz mit der jeweils anderen Druckleitung 11, 12 verbunden sind.

Der Lenkzylinder 30 umfasst einen Zylinderraum mit einem darin längsbeweglich angeordneten Kolben 33a, der in eine Kolbenstange 33 übergeht. Der Kolben 33a ist gegenüber der Zylinderwand des Lenkzylinders 30 gedichtet. Eine entsprechende Kolbendichtung an sich bekannter Bauart ist hier der besseren Übersichtlichkeit halber nicht dargestellt. Von einem Endstück 30a des Lenkzylinders 30 erstreckt sich ein Innenrohr 30b in den Zylinderraum. Kolben 33a und Kolbenstange 33 besitzen einen Hohlraum, in den das Innenrohr 30b hineinragt. Der von der Zylinderwand des Lenkzylinders 30 und der Kolbenstange 33 begrenzte Hohlraum bildet einen ersten Arbeitsraum 39 des Lenkzylinders 30, den Ringraum. Der von Zylinderwand und Kolben begrenzte Hohlraum auf der der Kolbenstange abgewandten Seite bildet zusammen mit dem Hohlraum im Inneren der Kolbenstange einen zweiten Arbeitsraum 40 des Lenkzylinders 30, den Kolbenraum. Das Innenrohr 30b weist zu diesem Zweck Durchlässe auf, um einen ungehinderten Fluidausgleich innerhalb des Kolbenraums zu ermöglichen. Die beiden Arbeitsräume 39, 40 haben in diesem Ausführungsbeispiel unterschiedlich große hydraulisch wirksame Flächen, sodass der Lenkzylinder 30 als Differentialzylinder ausgeführt ist.

Durch Druckbeaufschlagung eines der Arbeitsräume 39, 40 kann der Kolben 33a nach links oder rechts bewegt werden, wodurch die Kolbenstange 33 eingefahren oder ausgefahren wird. Ein erster Druckanschluss 31 im Endstück 30a des Lenkzylinders 30 verläuft axial durch das Innenrohr 30b bis in den Arbeitsraum 40. Ein zweiter Druckanschluss 32 ist im Bereich eines die Kolbenstange 33 dichtend umgebenden Führungsstücks des Lenkzylinders 30 angeordnet und mit dem Arbeitsraum 39 verbunden.

Eine technische Besonderheit des Lenkzylinders 30 bildet eine mechanische Sperrvorrichtung, die den Kolben 33a in dessen Mittelstellung, also einer Stellung, die der Geradeausstellung der Hinterachslenkung entspricht, innerhalb des Lenkzylinders 30 verrastet und damit arretiert. Hierzu liegt innerhalb des Innenrohrs 33b eine in axialer Richtung bewegliche Arretierhülse 34. Diese trägt in einem Endbereich einen als Verriegelungsraste dienenden Ringwulst 35. Als Sperrglieder dienen eine Mehrzahl umfangsverteilt um die Arretierhülse 34 angeordnete Federzungen, die an ihrem Ende jeweils eine Rastnase 36 tragen, die in einer Ringnut 42 an der Innenseite des in der Kolbenstange 33 ausgebildeten Hohlraums einrasten. In axialer Richtung greift die Arretierhülse 34 mit dem Ringwulst 35 über die im Endbereich des Innenrohrs 30b angeordneten Rastnasen 36 und die an der Innenwand der hohlen Kolbenstangen 33 ausgebildete Ringnut 42. In Figur 1 sind die Rastnasen 36 in ihrer verrasteten Stellung gezeigt, wobei der Ringwulst 35 verhindert, dass die Federzungen nach Innen ausweichen können. Der Ringwulst 35 hält somit die Rastnasen 36 in ihrer Einrastposition und sorgt als Verriegelungselement dafür, dass der Kolben 33a arretiert ist.

Die Federzungen und Rastnasen 36 sind mit dem Innenrohr 30b einstückig verbunden und bilden eine Art Spannzange, welche wiederum mit dem Endstück 30a des Lenkzylinders 30 verbunden ist, insbesondere verschweißt oder als Schmiedeteil ausgeführt ist. Wenn die Rastnasen 36 in der Ringnut 42 der Kolbenstange 33 verrastet sind, besteht somit eine starre, mechanische Verbindung zwischen den beiden endseitigen Anlenkpunkten des Lenkzylinders 30.

Im Ausführungsbeispiel ist die Ringnut 42 um 2 mm breiter ausgebildet, als die Breite der Rastnasen 36, sodass diese in der Einrastposition mit 2 mm Spiel mit der Ringnut 42 in Eingriff stehen. Die 2 mm Spiel entsprechen hierbei etwa einem Lenkausschlag von 0,5° an den Rädern der Hinterachse.

Somit kann die Lenkung bei der Montage des Fahrzeugs zunächst grob eingestellt werden, sodass die Räder etwa in Geradeausstellung stehen und die Rastnasen 36 in der Ringnut 42 verrastet sind. Anschließend erfolgt eine Achsvermessung, durch welche die exakte Geradeausstellung der Räder ermittelt wird. Diese entspricht einer Kolbenstellung des Lenkzylinders (Nullstellung) und kann softwaretechnisch im Steuergerät des Lenksystems hinterlegt werden, d.h. eine Justierung des Geradeauslaufs der Lenkung kann rein softwaretechnisch erfolgen. Im Betrieb des Lenksystems wird ein Lenkausschlag von dem Steuergerät ausgehend von der in der Software hinterlegten Nullstellung gesteuert. Im Fehlerfall verrastet die Sperrvorrichtung in der Mittelstellung, die zumindest grob der Geradeausstellung entspricht. Der sich aufgrund des Spiels in der Einrastposition ergebende Winkelfehler liegt innerhalb des zulässigen Toleranzbereichs, der z. B. +/- 1° betragen kann.

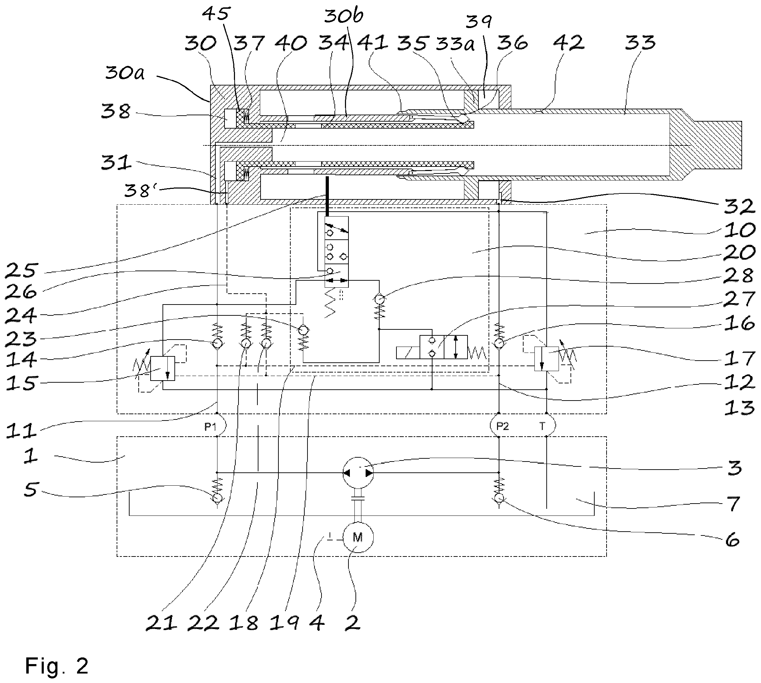

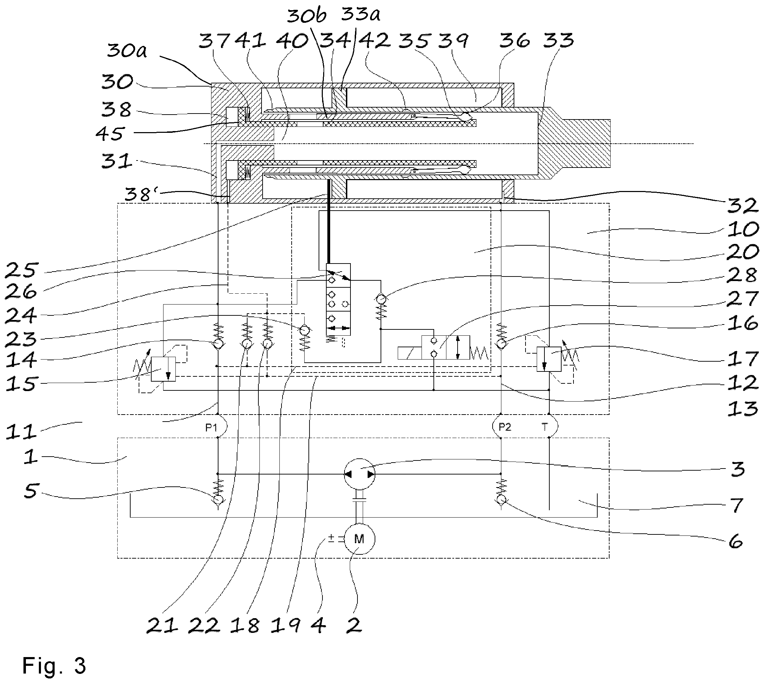

Um eine Bewegung des Kolbens 33a einzuleiten, muss die Sperrvorrichtung entsperrt werden. Hierzu kann die Arretierhülse 34, die als Stellelement für die von dem Ringwulst 35 gebildeten Verriegelungsraste dient, in Figur 1 nach rechts verstellt werden, sodass die Federzungen nach Innen federn können und die Rastnasen 36 aus ihrer Sperrstellung nach Innen ausweichen können. In Figur 2 ist die Situation gezeigt, dass die Arretierhülse 34 zum Ausfahren der Kolbenstange 33 in ihre Entsperrstellung nach rechts verstellt ist, sodass die Rastnasen 36 nach Innen ausweichen können. Da die Rastnasen 36 nun nicht mehr in die Ringnut 42 eingreifen, konnte der Kolben 33a durch Druckbeaufschlagung des Arbeitsraums 40 in der Zeichnungsebene nach rechts bewegt und somit die Kolbenstange 33 ausgefahren werden. In Figur 3 ist die umgekehrte Situation gezeigt, bei der die Arretierhülse 34 in ihre Entsperrstellung gestellt die Rastnasen 36 nach Innen freigegeben hat und die Kolbenstange 33 durch Druckbeaufschlagung des Arbeitsraums 39 nach links verstellt wurde.

Sobald der Kolben 33a aus seiner Mittelstellung heraus in die eine oder andere Richtung verstellt wurde, kann die Arretierhülse 34 nicht mehr in ihre Sperrstellung zurückgestellt werden, da die Rastnasen 36 nicht mehr nach Außen in die Ringnut 42 ausweichen können und der Ringwulst 35 somit nicht mehr über die Rastnasen 36 geschoben werden kann. Folglich kann, solange sich der Kolben 33a nicht in der Mittelstellung befindet, die Arretierhülse 34 nicht mehr bewegt werden.

Die Betätigung der Arretierhülse 34 und damit eine Entriegelung des Kolbens 33a erfolgt über einen vordruckgesteuerten Aktuator, der in das Endstück 30a des Lenkzylinders 30 integriert ist. Der Aktuator wird durch einen Druckraum 38 und einen Federraum 37 gebildet, die von einem beweglich gelagerten Hilfskolben 45 getrennt werden. Über einen Steueranschluss 38` kann der Druckraum 38 mit einem Steuerdruck druckbeaufschlagt werden, um den Hilfskolben 45 nach rechts zu verstellen. Der Hilfskolben 45 ist wiederum mit der Arretierhülse 34 verbunden, um diese in ihre Entsperrstellung zu verstellen. Eine Rückstellfeder im Inneren des Federraums 37 sorgt dafür, dass der Hilfskolben 45 in drucklosem Zustand eine Rückstellkraft nach links erfährt. Sobald die Kolbenstange 33 ihre Mittelposition erreicht und die Rastnasen 36 in Eingriff mit der Ringnut 42 gelangen und somit die Verriegelungsraste 35 freigeben, wird der Hilfskolben 45 unter der Krafteinwirkung der Rückstellfeder nach links bewegt und die Arretierhülse 34 somit in ihre Sperrstellung geführt.

Soll nun ausgehend von der in Figur 1 gezeigten Mittelstellung eine Auslenkung des Kolbens nach rechts zum Ausfahren der Kolbenstange 33 erfolgen, so wird über entsprechende Ansteuerung des Elektromotors 2 über die Pumpe 3 Druck in der Druckleitung 11 aufgebaut, die über das Rückschlagventil 14 mit dem Druckanschluss 31 verbunden ist, welcher zu dem Arbeitsraum 40 führt. Vor dem Rückschlagventil 14 zweigt eine Steuerleitung 18 ab, die einerseits über ein Rückschlagventil 21 mit dem Steueranschluss 38`, andererseits mit dem Steueranschluss des Lasthalteventils 17 verbunden ist, welches sich in der vom entgegengesetzten Arbeitsraum 39 zum Tank 7 führenden Tankrückleitung 13 befindet. Nachdem nun in der Leitung 18 ein Vordruck aufgebaut wird, bewegt der Aktuator durch Druckbeaufschlagung des Druckraums 38 zunächst den Hilfskolben 45 und damit die Arretierhülse 34 nach rechts, sodass die Rastnasen 36 nach Innen ausweichen können. Die Sperrvorrichtung gibt somit den Kolben 33a frei, sodass durch Druckbeaufschlagung des Arbeitsraumes 40 der Kolben 33a nach rechts bewegt und die Kolbenstange 33 ausgefahren werden kann. Der entsprechende Zustand ist in Figur 2 dargestellt.

Im umgekehrten Fall, in dem die Kolbenstange 33 eingefahren werden soll, wird über die Druckversorgungseinheit 1 Hydraulikdruck in der Druckleitung 12 aufgebaut. Somit wird nun über die Vordruckleitung 19 und das Rückschlagventil 22 Druck in dem Druckraum 38 des Aktuators aufgebaut, sodass wiederum der Hilfskolben 45 und mit ihm die Arretierhülse 34 nach rechts verstellt und die Rastnasen 36 entsperrt werden. Über den Vordruck in der Leitung 19 wird außerdem das Lasthalteventil 15 entsperrt, sodass Hydraulikflüssigkeit aus dem Arbeitsraum 40 in den Tank 7 verdrängt werden kann. Nachdem das Rückschlagventil 16 öffnet, baut sich Hydraulikdruck im Arbeitsraum 39 auf, sodass die Kolbenstange 33 einfährt.

Die Vordrücke, bei denen der Aktuator schaltet und die Lasthalteventile 15, 17 öffnen, können so eingestellt werden, dass der Reihe nach zunächst eine Entsperrung der Sperrvorrichtung erfolgt und anschließend das Lasthalteventil 15, 17 des gegenüberliegenden Arbeitsraums 40, 39 geöffnet wird. Beispielsweise kann die hydraulische Lenkung für einen maximalen Hydraulikdruck von 200 bar ausgelegt sein. Beispielhaft kann vorgesehen sein, dass bei einem Vordruck von 20 bar an dem Anschluss 38` der Aktuator ausgelenkt und somit die Sperrvorrichtung entsperrt wird. Dies wird über eine entsprechende Wahl der Federkraft der Rückstellfeder im Federraum 37 erreicht. Bei einem beispielhaften Vordruck von 40 bar öffnet das gegenüberliegende Lasthalteventil 15, 17, sodass der Kolben 33a des nun entsperrten Lenkzylinders 30 ausgelenkt wird.

Die Lasthalteventile 15, 17 wirken zudem als Überdruckventile, indem sie bei Druckspitzen von über 200 bar in einem der Arbeitsräume 39, 40 öffnen und den Überdruck in Richtung Tank 7 entlasten. Ein solcher Überdruck kann beispielsweise aufgrund einer von den Rädern auf den Lenkzylinder 30 ausgeübten Kraft bei einer harten Bordsteinberührung auftreten. Die Überdruckentlastung über die Lasthalteventile 15, 17 schützt hierbei die Hydrauliklenkung vor Schäden durch Überlastung.

Im Fehlerfalle muss eine Deaktivierung der Hinterachslenkung und Zentrierung in Geradeausstellung erfolgen. Auch bei schneller Vorwärtsfahrt kann es vorteilhaft sein, die Hinterachslenkung zu deaktivieren und in Mittelstellung zu arretieren, um das Fahrverhalten des Fahrzeugs bei hohen Geschwindigkeiten zu stabilisieren. Hierzu dient die Sicherheitsschaltung 20, deren Funktion nachfolgend anhand der Figuren erläutert wird.

Die Sicherheitsschaltung 20 ermöglicht eine wechselweise Entlastung eines der Arbeitsräume 39, 40 zum Tank 7 hin. Die Sicherheitsschaltung 20 umfasst ein Umschaltventil 26 mit drei Schaltstellungen. In der in Figur 2 gezeigten unteren Ventilstellung verbindet das Umschaltventil 26 den Hydraulikanschluss 31 und damit den Arbeitsraum 40 des Lenkzylinders 30 über das Absperrventil 27 sowie ein weiteres Rückschlagventil 28 mit der Tankrückleitung 13. In dieser Schaltstellung, die bei in Bezug auf die Mittelstellung ausgefahrener Kolbenstange 33 eingenommen wird, kann somit bei geöffnetem Absperrventil 27 im Falle eines Ausfalls des Lenksystems Hydraulikmittel aus dem Arbeitsraum 40 in Richtung Tank 7 entweichen, sodass die Kolbenstange 33 in Richtung ihrer Mittelstellung einfahren kann.

In der in Figur 3 gezeigten oberen Schaltstellung verbindet das Umschaltventil 26 den Hydraulikanschluss 32 und damit den Arbeitsraum 39 des Lenkzylinders 30 über das Absperrventil 27 und das Rückschlagventil 28 mit der Tankrückleitung 13. In dieser Schaltstellung, die bei in Bezug auf die Mittelstellung eingefahrener Kolbenstange 33 eingenommen wird, kann somit bei geöffnetem Absperrventil 27 im Falle eines Ausfalls des Lenksystems Hydraulikmittel aus dem Arbeitsraum 39 in Richtung Tank 7 entweichen, sodass die Kolbenstange 33 in Richtung ihrer Mittelstellung ausfahren kann.

In der in Figur 1 gezeigten mittleren Schaltstellung ist das Umschaltventil 26 gesperrt, sodass aus keinem der Arbeitsräume 39, 40 Hydraulikmittel entweichen kann, der Lenkzylinder 20 also bei Ausfall oder Deaktivierung des Lenksystems hydraulisch gesperrt ist. Somit kann trotz des zuvor erläuterten geringen Spiels in der mechanischen Sperrvorrichtung der Lenkzylinder 30, solange kein Verlust des Hydraulikmittels auftritt, nicht bewegt werden, da er wie gesagt zusätzlich hydraulisch gesperrt ist.

Durch das Umschaltventil 26 wird somit sichergestellt, dass über die Sicherheitsschaltung 20 stets nur eine Rückbewegung des Kolbens 33a in seine Mittelstellung freigegeben wird. Die Aktivierung der Sicherheitsschaltung 20 erfolgt über das stromlos geöffnete Absperrventil 27, welches im Normalbetrieb, d.h. im bestromten Zustand, den über das Umschaltventil 26 in Richtung Tankrückleitung 13 geschalteten Fluidweg blockiert.

Im Fehlerfall, d.h. bei geöffnetem Absperrventil 27, ist es technisch nicht möglich (auch bei maximalem Volumenstrom von der Motor-Pumpen-Einheit 1), dass ein Druck im System aufgebaut werden kann, mit dem die erste oder zweite Druckstufe des Aktuators bzw. der Lasthalteventile 15, 17 erreicht würde. Somit ist sichergestellt, dass bei einer fehlerhaften Ansteuerung des Motors 2 keine ungewollte Lenkbewegung initiiert werden kann.

Ein weiteres Rückschlagventil 23, welches ebenfalls über das Absperrventil 27 mit der Tankrückleitung 13 verbunden ist, sorgt dafür, dass bei geöffnetem Absperrventil 27, d.h. bei aktivierter Sicherheitsschaltung 20, der Druckraum 38 des Aktuators zum Tank 7 hin entlastet ist, sodass bei Erreichen der Mittelstellung die Rückstellfeder im Federraum 37 die Arretierhülse 34 nach links in ihre Sperrstellung verstellt und den Kolben 33a somit in seiner Mittelstellung mechanisch arretiert. Damit ist sichergestellt, dass bei Ausfall der Lenkung der Lenkzylinder sowohl mechanisch als auch hydraulisch blockiert wird, sodass der sichere Ausfallzustand erreicht und redundant, also sowohl bei Verlust von Hydraulikmittel, also auch bei mechanischem Versagen der Sperrvorrichtung, gehalten wird.

Für die Verriegelung ist folgendes zu berücksichtigen: So lange das Absperrventil 27 geschlossen ist, d.h. so lange dieses Magnetventil 27 bestromt bleibt, ist der Hilfskolben 45 immer mit dem Maximaldruck vorgespannt, der seit dem letzten Arretieren aufgetreten ist. Erst durch Öffnen des Absperrventils 27 wird der Druck aus Druckraum 38 des Hilfskolbens 45 zum Tank 7 hin abgebaut, wodurch die Federkraft der Rückstellfeder überhaupt auf die Arretierhülse 34 wirkt.

Die Betätigung des Umschaltventils 26 erfolgt über die Kolbenstange 33 und zwar über einen in Umfangsrichtung umgestalteten Bereich 41, der über einen Taster 25, der wiederum das Umschaltventil 26 betätigt, abgetastet wird. Zu diesem Zweck ist im Ausführungsbeispiel die innen hohle Kolbenstange 33 über den Kolben 33a hinaus in den Arbeitsraum 40 verlängert und umgreift das Innenrohr 30b. Zu ihrem Ende hin ist der Außendurchmesser der Verlängerung 41 der Kolbenstange 33 reduziert. Dies entspricht der in Figur 1 gezeigten Mittelstellung des Kolbens 33a, d.h. wenn der Taster 25 an der Verjüngung der Verlängerung 41 der Kolbenstange 33 anliegt, befindet sich das Umschaltventil 26 in der mittelern Stellung, in der das Umschaltventil 26 sperrt.

In Figur 2 ist die Kolbenstange 33 ausgefahren und der Taster 25 liegt jenseits des Endes der Verlängerung 41 der Kolbenstange, sodass dieser weiter ausfahren kann. Dementsprechend schaltet der Taster 25, wenn er das Ende der Verlängerung 41 erreicht, das Umschaltventil 26 in die untere Schaltstellung, in welcher es den zum Arbeitsraum 40 führenden Druckanschluss 31 über das Absperrventil 27 mit der Tankrückleitung 13 verbindet. Bei geöffnetem Absperrventil 27, d.h. bei aktivierter Sicherheitsschaltung 20, kann somit Hydraulikflüssigkeit aus dem Arbeitsraum 40 zum Tank 7 verdrängt werden, sodass die Kolbenstange 33 in Richtung ihrer Mittelstellung einfahren kann, bis das Umschaltventil 26 bei Erreichen der Mittelstellung sperrt (Fig. 1).

In Figur 3 schließlich ist die Kolbenstange 33 eingefahren. Der Taster 25 liegt nun im Bereich der Verlängerung 41 der Kolbenstange 33 und schiebt somit den Taster 25 soweit ein, dass das Umschaltventil 26 in seine obere Schaltstellung geschaltet ist, in der das Umschaltventil 26 den zum Arbeitsraum 39 führenden Druckanschluss 32 über das Absperrventil 27 mit der Tankrückleitung 13 verbindet. Bei geöffnetem Absperrventil 27 kann somit Hydraulikflüssigkeit aus dem Arbeitsraum 39 zum Tank 7 verdrängt werden, sodass die Kolbenstange 33 in Richtung ihrer Mittelstellung ausfahren kann, und zwar wiederum so lange, bis das Umschaltventil 26 bei Erreichen der Mittelstellung sperrt (Fig. 1).

Die Sicherheitsschaltung ist nicht auf die Verwendung eines Umschaltventils beschränkt. Vielmehr können andere Ventilschaltungen zum Einsatz kommen, mit denen entweder eine Verbindung zwischen jeweils einem Arbeitsraum 39, 40 und dem Tank geschaltet wird, oder mit denen eine vorzugsweise unidirektionale Verbindung zwischen den Arbeitsräumen 39, 40 im Falle eines Gleichlaufzylinders geschaltet wird. So können z.B. anstatt des Umschaltventils 26 zwei Absperrventile, bevorzugt mechanisch entsperrbare Rückschlagventile, verwendet werden, von denen jeweils eines geöffnet wird. Die Ansteuerung der Absperrventile kann über die Kolbenstange 33 erfolgen, die in diesem Fall für jedes der Absperrventile einen umgestalteten Bereich aufweist, der von einem zugehörigen Taster abgetastet wird und jeweils eines der Absperrventile schaltet. Ebenso ist es möglich, dass die Ansteuerung über die Arretierhülse 34 erfolgt, die in diesem Fall gleichsam als Schaltelement wirkt.

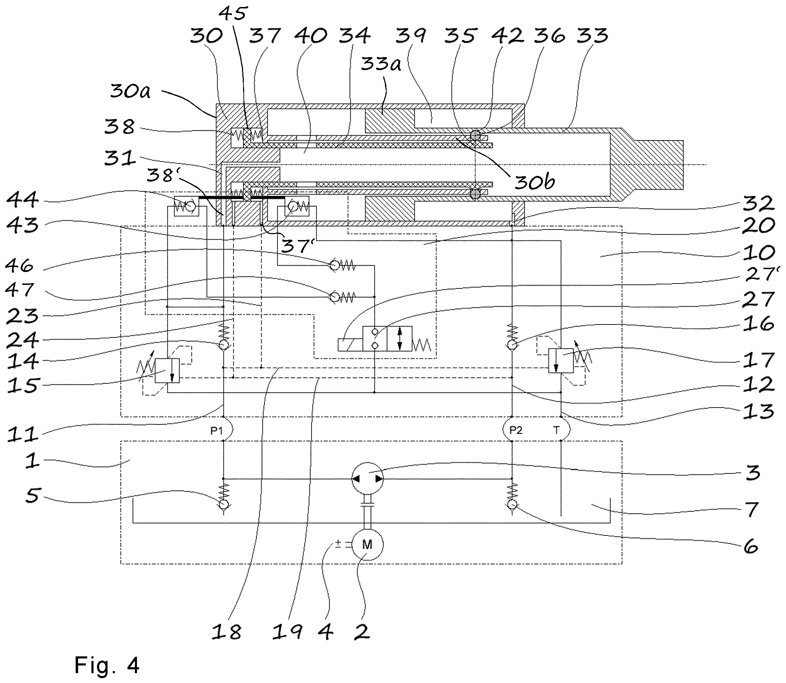

In den Figuren 4 bis 6 ist ein zweites Ausführungsbeispiel dargestellt, bei dem anstelle eines Umschaltventils zwei mechanisch entperrbare Rückschlagventile 43, 44 verwendet werden. Die Arretierhülse 34 hat in dieser Ausführung zwei Entsperrstellungen und als Sperrglieder wirken Sperrkugeln 36', die in die Ringnut 42 an der Innenseite der innen hohlen Kolbenstange 33 eingreifen und von dem Ringwulst 35 am Ende der Arretierhülse 34 in deren Sperrstellung blockiert werden.

Im zweiten Ausführungsbeispiel ist die mechanische Sperrvorrichtung des Lenkzylinders 30, die den Kolben 33a in dessen Mittelstellung arretiert, wie folgt ausgebildet. Innerhalb des Innenrohrs 33b liegt die in axialer Richtung bewegliche Arretierhülse 34. Sie trägt in einem Endbereich wieder den als Verriegelungsraste dienenden Ringwulst 35. Als Sperrglieder dienen eine Reihe von umfangsverteilt um die Arretierhülse 34 angeordnete Sperrkugeln 36', die in der Ringnut 42 in der Innenseite des in der Kolbenstange 33 ausgebildeten Hohlraums verrasten. Im Endbereich des Innenrohrs 30b sind hierzu die Sperrkugeln 36' mit radialem Spiel aufgenommen In axialer Richtung greift die Arretierhülse 34 mit dem Ringwulst 35 in die im Endbereich des Innenrohrs 30b ausgebildete Kugelaufnahme ein. In Figur 4 sind die Sperrkugeln 36' in ihrer verrasteten Stellung gezeigt, wobei der Ringwulst 35 die Sperrkugeln 36' in ihrer Einrastposition hält und somit als Verriegelungselement dafür sorgt, dass der Kolben 33a arretiert ist.

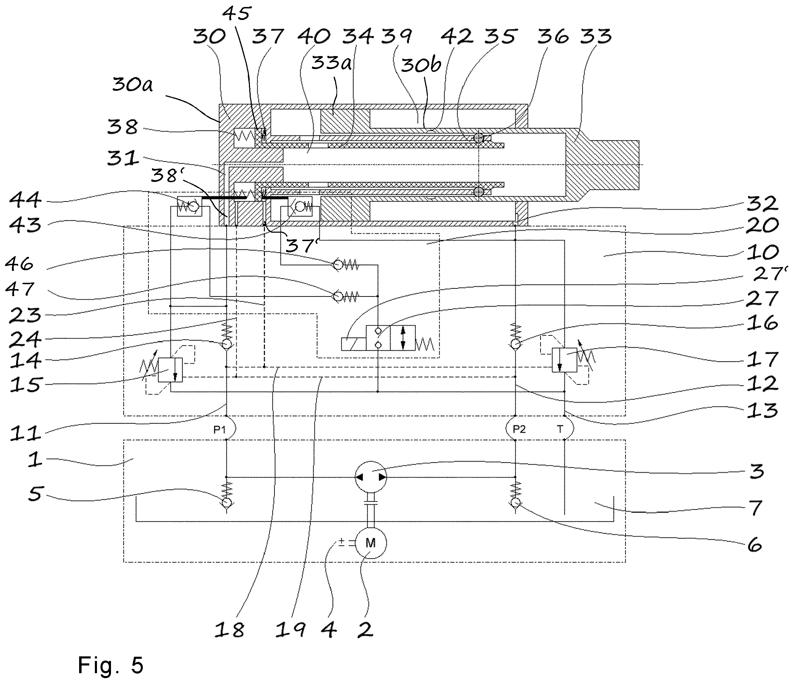

Um eine Bewegung des Kolbens 33a einzuleiten, muss die Sperrvorrichtung entsperrt werden. Hierzu kann die Arretierhülse 34 in Figur 4 nach links oder rechts verstellt werden, sodass die Sperrkugeln 36' aus ihrer Sperrstellung entweder auf die rechte oder die linke Seite des Ringwulstes 35 ausweichen können. In Figur 5 ist die Situation gezeigt, dass die Arretierhülse 34 zum Einfahren der Kolbenstange 33 in der Zeichnungsebene nach links verstellt ist, sodass die Sperrkugeln 36' auf die rechte Seite der Verriegelungsraste 35 ausweichen können. Da die Sperrkugeln 36' nun nicht mehr in die Ringnut 42 eingreifen, kann der Kolben 33a durch Druckbeaufschlagung des Arbeitsraums 39 in der Zeichnungsebene nach links bewegt und somit die Kolbenstange 33 eingefahren werden.

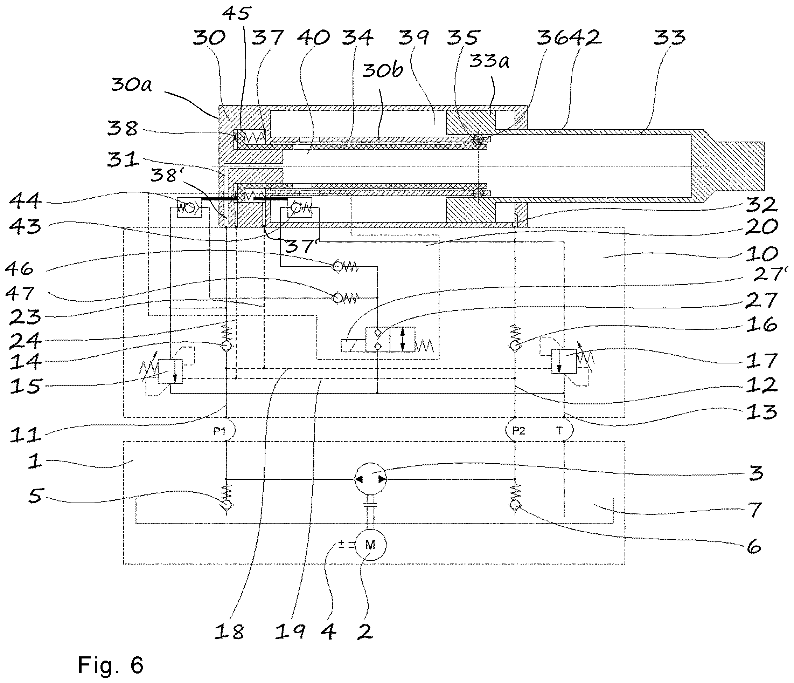

In Figur 6 ist die umgekehrte Situation gezeigt, in der die Arretierhülse 34 in der Zeichnungsebene nach rechts verstellt wurde, um die Kolbenstange 33 nach rechts auszufahren. Die Sperrkugeln 36' können somit auf die linke Seite der Verrieglungsraste 35 ausweichen und geben die Ringnut 42 frei, sodass die Kolbenstange 33 nach rechts verstellt werden kann.

Wesentlich hierbei ist, dass, sobald die Sperrkugeln 36' aus ihrer Sperrstellung, also dem Eingriff in die Ringnut 42, herausbewegt wurden und die Kolbenstange 33 sich nicht mehr in ihrer Mittelstellung befindet, die Verriegelungsraste 35 in ihrer nach links oder rechts verstellten Position eingerastet ist, da die Sperrkugeln nicht mehr nach außen in den Bereich der Ringnut 42 ausweichen können. Folglich kann in dieser Position die Arretierhülse 34 nicht mehr bewegt werden. Somit speichert die Auslenkung der Arretierhülse 34 im zweiten Ausführungsbeispiel auf mechanische Weise den Auslenkungszustand des Lenkzylinders 30. Daher kann der Auslenkungszustand der Arretierhülse 34 zur Ansteuerung der Sicherheitsschaltung 20 genutzt werden, welche dazu dient, durch Entlastung eines der Arbeitsräume 39, 40 eine Rückbewegung des Kolbens 33a in Richtung seiner Mittelstellung innerhalb des Lenkzylinders 30 zu ermöglichen.

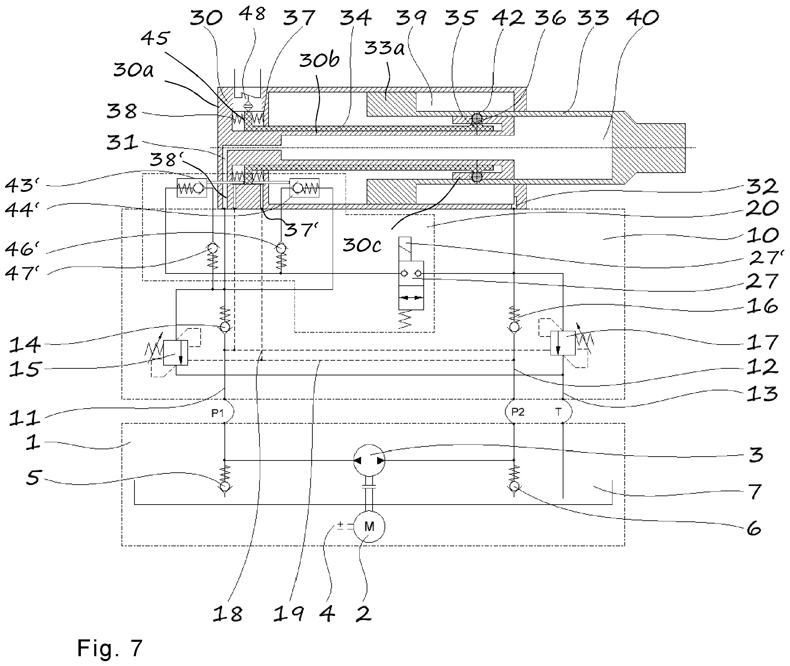

Die Betätigung der Arretierhülse 34 und damit eine Entriegelung des Kolbens 33a erfolgt über einen vordruckgesteuerten Aktuator, der in das Endstück 30a des Lenkzylinders 30 integriert ist. Der Aktuator wird durch die zwei Druckräume 37, 38 gebildet, die von dem beweglich gelagerten Hilfskolben 45 getrennt werden. Über entsprechende Steueranschlüsse 37`, 38` können die Druckräume 37, 38 wahlweise mit einem Steuerdruck druckbeaufschlagt werden, um den Hilfskolben 45 in die eine oder andere Richtung zu verstellen. Der Hilfskolben 45 ist wiederum mit der Arretierhülse 34 verbunden, um diese in deren erste oder zweite Entsperrstellung zu verstellen. Rückstellfedern im Inneren der Druckräume 37, 38 sorgen dafür, dass der Hilfskolben 45 im drucklosen Zustand eine Rückstellkraft in Richtung seiner Mittelstellung erfährt. Sobald die Kolbenstange 33 ihre Mittelposition erreicht und die Sperrkugeln 36' in Eingriff mit der Ringnut 42 gelangen und somit die Verriegelungsraste 35 freigeben, wird der Hilfskolben 45 unter der Krafteinwirkung der Rückstellfedern in seine Mittelstellung geführt. Zusätzlich kann über einen berührungslosen Sensor (48 in Fig. 7) die Position des Hilfskolbens 45 überwacht und an ein Steuergerät gemeldet werden.

Soll nun ausgehend von der in Figur 4 gezeigten Mittelstellung eine Auslenkung des Kolbens 33a nach links zum Einfahren der Kolbenstange 33 erfolgen, so wird über entsprechende Ansteuerung des Elektromotors 2 über die Pumpe 3 Druck in der Druckleitung 12 aufgebaut, die über das Rückschlagventil 16 zu dem Druckanschluss 32 führt, welcher mit dem Arbeitsraum 39 verbunden ist. Vor dem Rückschlagventil 16 zweigt eine Steuerleitung 19 ab, die einerseits mit dem Steueranschluss 37`, andererseits mit dem Steueranschluss des Lasthalteventils 15 verbunden ist, welches sich in der vom entgegengesetzten Arbeitsraum 40 zum Tank 7 führenden Rückleitung 13 befindet. Nachdem nun in der Leitung 19 ein Vordruck aufgebaut wird, bewegt der Aktuator durch Druckbeaufschlagung des Druckraums 37 zunächst den Hilfskolben 45 und damit die Arretierhülse 34 nach links, sodass die Sperrkugeln 36' auf die rechte Seite der Verriegelungsraste 35 ausweichen können. Die Sperrvorrichtung gibt somit den Kolben 33a frei, sodass durch Druckbeaufschlagung des Arbeitsraumes 39 der Kolben 33a nach links bewegt und die Kolbenstange 33 eingefahren werden kann. Der entsprechende Zustand ist in Figur 5 dargestellt.

Im umgekehrten Fall, in dem die Kolbenstange 33 ausgefahren werden soll, wird über die Druckversorgungseinheit 1 Hydraulikdruck in der Druckleitung 11 aufgebaut. Somit wird über die Vordruckleitung 18 Druck in dem Druckraum 38 des Aktuators aufgebaut, sodass der Hilfskolben 45 und mit ihm die Arretierhülse 34 nach rechts verstellt wird. Die Sperrkugeln 36' können somit auf die linke Seite der Verriegelungsraste 35 ausweichen. Über den Vordruck in der Leitung 18 wird außerdem das Lasthalteventil 17 entsperrt, sodass Hydraulikflüssigkeit aus dem Arbeitsraum 39 in den Tank 7 verdrängt werden kann. Nachdem das Rückschlagventil 14 öffnet, baut sich Hydraulikdruck im Arbeitsraum 40 auf, sodass die Kolbenstange 33 ausfährt.

Die Vordrücke, bei denen der Aktuator und die Lasthalteventile 15, 17 öffnen, können wie im ersten Ausführungsbeispiel so eingestellt werden, dass der Reihe nach zunächst eine Entsperrung der Verriegelungseinrichtung erfolgt und anschließend das Lasthalteventil 15, 17 des gegenüberliegenden Arbeitsraums 40, 39 geöffnet wird.

Die Sicherheitsschaltung 20 dient zur wechselweisen Entlastung eines der Arbeitsräume 39, 40 zum Tank 7. Die Sicherheitsschaltung 20 umfasst zwei in parallelen Leitungsabschnitten angeordnete Rückschlagventile 46, 47, die jeweils in Richtung Tank 7 öffnen, also einen Fluidstrom zum Tank 7 freigeben. In Reihe mit den beiden parallel geschalteten Rückschlagventilen 46, 47 ist wieder das stromlos geöffnete Absperrventil 27 angeordnet. Die Rückschlagventile 46, 47 verhindern, dass Hydraulikflüssigkeit aus dem einen Arbeitsraum in Richtung des anderen strömen kann.

Anstelle von zwei Rückschlagventilen 46, 47 kann auch ein Wechselventil eingesetzt werden, über das die beiden Entlastungsleitungen mit dem Absperrventil 27 verbunden sind. Ein Wechselventil ist ein hydraulisches Ventil mit zwei Eingängen und einem Ausgang. Das Wechselventil stellt die technische Umsetzung einer nicht-ausschließenden ODER-Verknüpfung im Bereich der Hydraulik dar. Das Wechselventil besteht aus einem Gehäuse mit zwei Eingangsanschlüssen, einem Ausgangsanschluss und einem meist kugelförmigen Schaltkörper. Das Wechselventil hat somit nur zwei definierte Schaltstellungen. In jeder davon wird immer ein Eingang vom Schaltkörper gesperrt, sodass ein Hydraulikfluss zwischen den Eingängen unterbunden ist.

In einem Fehlerfalle, beispielsweise bei Ausfall der Stromversorgung, öffnet das als Magnetventil ausgeführte Absperrventil 27 und aktiviert somit die Sicherheitsschaltung 20. In Abhängigkeit des Auslenkungszustandes der Arretierhülse 34 wird nun ein Fluidstrom entweder über das Rückschlagventil 46 oder über das parallele Rückschlagventil 47 freigegeben.

Hierzu sind zwei mechanisch entsperrbare Rückschlagventile 43, 44 vorgesehen, über die wechselweise eine der beiden Entlastungsleitungen in Richtung Tank 7 freigegeben werden kann. Die Entsperrung der Rückschlagventile 43, 44 erfolgt direkt durch den Hilfskolben 45 bei einer Auslenkung in die eine oder andere Richtung. Die entsperrbaren Rückschlagventile 43, 44 sind hierbei als separate Bauteile gezeichnet, können jedoch vorzugsweise direkt in das Endstück 30a des Lenkzylinders 30 integriert werden. Durch Entsperrung jeweils eines der Rückschlagventile 43, 44 über den Hilfskolben 45 des Aktuators wird eine der beiden Entlastungsleitungen über die Rückschlagventile 46, 47 freigegeben. Alternativ zu den zwei mechanisch entsperrbaren Rückschlagventilen 43, 44 kann natürlich auch ein Umschaltventil vorgesehen sein.

Eine Entsperrung eines der Rückschlagventile 43, 44 erfolgt druckgesteuert über die Steuerleitungen 23 oder 24, die jeweils mit den Steuerleitungen 18 bzw. 19 verbunden sind. Die Rückschlagventile sind mit der Arretierhülse 34 mechanisch verbunden, derart, dass in der in Figur 5 gezeigten Auslenkung des Kolbens 33a das zum Ringraum 39 führende Rückschlagventil 43 entsperrt, während das andere Rückschlagventil 44 geschlossen bleibt und in der in Figur 6 gezeigten Auslenkung des Kolbens 33a in umgekehrter Weise das zum Kolbenraum 40 führende Rückschlagventil 44 entsperrt, während das Rückschlagventil 43 geschlossen bleibt. Hierbei entspricht der Entsperrzustand der Rückschlagventile 43, 44 stets der mechanisch gespeicherten Stellung der Arretierhülse 34. Ist die Arretierhülse 34 durch die Sperrkugeln 36' blockiert, so bleiben die Rückschlagventile 43, 44 in ihrer zuvor eingenommenen Stellung. Eine Umschaltung der Rückschlagventile 43, 44 kann daher nur in der Mittelstellung des Kolbens 33a erfolgen, wenn die Sperrkugeln 36' in die Ringnut 42 ausweichen können.

In Figur 7 ist schließlich ein drittes Ausführungsbeispiel dargestellt, bei dem als Lenkzylinder 30 ein Gleichgangzylinder zum Einsatz kommt und zur Deaktivierung der Lenkung eine unidirektionale Verbindung zwischen den Arbeitsräumen 39, 40 geschaltet wird, damit der Kolben 33a in Richtung der Mittelstellung bewegt werden kann.

Im dritten Ausführungsbeispiel ist der Kolben 33a des Lenkzylinders 30 über entsprechende Dichtungen (nicht gezeigt) nicht nur gegenüber der Zylinderinnenwand gedichtet, sondern auch das Innenrohrs 30b ist an seinem Ende gegenüber der Wandung des inneren Hohlraums der Kolbenstange 33 gedichtet. Der von der Zylinderwand des Lenkzylinders 30 und der Kolbenstange 33 begrenzte Hohlraum bildet den ersten Arbeitsraum 39 (Ringraum) und der von der Kolbenstange 33 und dem Innenrohr 33b begrenzte axial innere Hohlraum bildet den zweiten Arbeitsraum 40 (Kolbenraum) des Lenkzylinders 30. Die beiden Arbeitsräume 39, 40 haben gleiche hydraulisch wirksame Flächen, sodass der Lenkzylinder als Gleichgangzylinder ausgeführt ist.

Die Sperrvorrichtung ist ähnlich dem zweiten Ausführungsbeispiel durch ein Kugelgesperre mit einer Mehrzahl umfangsverteilter Sperrkugeln 36' ausgeführt, die in einer Ringnut 42 an der Innenseite des in der Kolbenstange 33 ausgebildeten Arbeitsraums 40 verrasten. Der Endbereich des Innenrohrs 30b ist hierzu mit einem Kugelkäfig 30c versehen, in welchem die Sperrkugeln 36' mit radialem Spiel ausgenommen sind und in den in axialer Richtung die Arretierhülse 34 mit dem Ringwulst 35 eingreift. In der in Figur 7 gezeigten Sperrstellung der Arretierhülse 34 hält der Ringwulst 35 die Sperrkugeln 36' in ihrer Einrastposition, sodass der Kolben 33a arretiert ist.

Die Arretierhülse 3 hat wie im zweiten Ausführungsbeispiel zwei Entsperrstellungen, in die sie über den in das Endstück 30a des Lenkzylinders 30 integrierten, vordruckgesteuerten Aktuator verstellt werden kann, der von den beiden Druckräumen 37, 38 und dem zwischen diesen beweglichen Hilfskolben 45 gebildet wird. Die Sperrkugeln 36' können dann je nach Richtung der Auslenkung der Arretierhülse 34 in die jeweils andere Richtung ausweichen und die Ringnut 42 frei geben, sodass der Kolben 33a verstellt werden kann. Der Aktuator ist mit einem berührungslosen Sensor 48 versehen, der die Position des Hilfskolbens 45 überwacht und an ein Steuergerät meldet.

Die Sicherheitsschaltung 20 ermöglicht im dritten Ausführungsbeispiel einen direkten, unidirektionalen Fluidstrom zwischen den beiden Arbeitsräumen 39, 40. Hierzu sind zwei in parallelen Leitungsabschnitten angeordnete Rückschlagventile 46', 47' vorgesehen, die in jeweils entgegengesetzter Richtung öffnen, also einen Fluidstrom in die eine oder die andere Richtung freigeben. In Reihe mit den beiden parallel geschalteten Rückschlagventilen 46', 47' ist das stromlos geöffnete Absperrventil 27 angeordnet. Im Normalbetrieb wird die Magnetspule des Absperrventils 27 bestromt. Die Bypassleitung zwischen den Arbeitsräumen 39, 40 ist somit verschlossen und es kann kein direkter Fluidstrom zwischen den Arbeitsräumen 39, 40 erfolgen, der zu einer Kolbenbewegung in Richtung der Mittelstellung führt.

In einem Fehlerfalle, beispielsweise bei Ausfall der Stromversorgung, öffnet das Absperrventil 27 und aktiviert somit die Sicherheitsschaltung 20. In Abhängigkeit des Auslenkungszustandes der Arretierhülse 34 wird nun ein Fluidstrom entweder über das Rückschlagventil 46` oder über das parallele Rückschlagventil 47' freigegeben. Hierzu sind zwei mechanisch entsperrbare Rückschlagventile 43', 44` vorgesehen. Die Entsperrung der Rückschlagventile 43', 44`erfolgt direkt durch den Hilfskolben 45 bei einer Auslenkung in die eine oder andere Richtung. Durch Entsperrung jeweils eines der Rückschlagventile 43', 44` über den Hilfskolben 45 des Aktuators wird einer der unidirektionalen Strömungswege über die Rückschlagventile 46', 47' freigegeben. Die entsperrbaren Rückschlagventile 43', 44` sind hierbei als separate Bauteile gezeichnet, können jedoch vorzugsweise direkt in das Endstück 30a des Lenkzylinders 30 integriert werden.

Die Reihenschaltung aus den Ventilen 43` bzw. 44`, 27 und 46` bzw. 47' bewirkt, dass in der Verbindungsleitung zwischen den beiden flächengleichen Arbeitsräumen 39, 40 nur ein gerichteter Volumenstrom der Hydraulikflüssigkeit von dem einen in den jeweils anderen Arbeitsraum stattfinden kann und zwar exakt so lange bis die Kolbenstange 33 die Verriegelungsposition erreicht hat und die Arretierhülse 34 aufgrund der Federkraft in den Druckräumen 37 bzw. 38 in die Mittenposition zurückbewegt wird.

Ist bei geöffnetem Absperrventil 27 eine direkte Verbindung zwischen den Arbeitsräumen 39, 40 geschaltet, so bewirken äußere Kräfte auf die Räder eine Rückbewegung in die Mittelstellung. In der Mittelstellung werden die Sperrkugeln 36' über die Verriegelungsraste 35 nach außen gedrückt und in der Sperrstellung der Verriegelungsraste 35 ist der Formschluss zwischen den Sperrkugeln 36' und der Kolbenstange 33 hergestellt.

Auch im dritten Ausführungsbeispiel können der hydraulisch betätigte Aktuator und die vordruckgesteuerten Lasthalteventile 15, 17 so eingestellt werden, dass der Aktuator bei einem niedrigeren, ersten Druckwert umsteuert und die vordruckgesteuerten Lasthalteventile 15, 17 erst bei Anliegen eines höheren, zweiten Druckwertes am Steueranschluss öffnen, sodass die Sperrkugeln 36' die Ringnut 42 freigeben, bevor der Kolben 33a bewegt werden kann.

Abschließend sei darauf hingewiesen, dass die im Rahmen der Ausführungsbeispiele gezeigten Figuren schematisch und nicht maßstäblich sind. Vielmehr können die Geometriedaten der gezeigten Lenkzylinder abweichend gewählt werden.

## Patentansprüche

1. Hydraulische Hinterachslenkung für mehrachsige Fahrzeuge, mit
einem Lenkzylinder (30), der einen Zylinderraum, einen dichtend in dem Zylinderraum gelagerten Kolben (33a), der den Zylinderraum in zwei Arbeitsräume (39, 40) unterteilt, und mindestens eine von dem Kolben (33a) getragene Kolbenstange (33) umfasst,
wobei der Lenkzylinder (30) mit einer mechanischen Sperrvorrichtung (34, 35, 36, 36') versehen ist, die den Kolben (33a) bei Erreichen einer Mittelstellung innerhalb des Lenkzylinders (30) arretiert,
wobei die Sperrvorrichtung (34, 35, 36, 36') mindestens ein Sperrglied (36, 36') aufweist, welches in gesperrtem Zustand von einem Verriegelungselement (34, 35) in einer Einrastposition (42) gehalten wird, und
wobei das Verriegelungselement (34, 35) über einen von Kolben (33a) und Kolbenstange (33) separaten, hydraulisch betätigten Aktuator (37, 38, 45) zwischen einer Sperrstellung, in der das Verriegelungselement (34, 35) das Sperrglied (36, 36') in der Einrastposition (42) hält, und mindestens einer ersten Entsperrstellung, in der das Verriegelungselement (34, 35) das Sperrglied (36, 36') freigibt, verstellbar ist,
**dadurch gekennzeichnet, dass**
von jedem der beiden Arbeitsräume (39, 40) jeweils eine Rückleitung zu einem Tank (7) führt und in jeder der Rückleitungen ein hydraulisch entsperrbares Ventil (15, 17), insbesondere Lasthalteventil, angeordnet ist, dass
die hydraulisch entsperrbaren Ventile (15, 17) als vordruckgesteuerte Ventile ausgebildet sind, deren Steueranschluss jeweils mit einer von einer Pumpe (3) zu dem jeweils anderen Arbeitsraum (39, 40) führenden (34, 35, 36, 36') Druckleitung (11, 12) verbunden ist, und dass
der hydraulisch betätigte Aktuator (37, 38, 45) so eingestellt ist, dass er bei Anliegen eines ersten Druckwerts das Verriegelungselement (34, 35) in die Entsperrstellung verstellt und die vordruckgesteuerten Ventile (15, 17) so eingestellt sind, dass sie bei Anliegen eines zweiten Druckwertes am Steueranschluss öffnen, wobei der zweite Druckwert höher als der erste Druckwert ist.

2. Hydraulische Hinterachslenkung nach Anspruch 1, mit mindestens einem mechanisch schaltbaren Ventil (26; 43, 44; 43', 44'), welches mit der Kolbenstange (33) oder dem Verriegelungselement (34, 35) mechanisch gekoppelt ist, um in Abhängigkeit der Auslenkung des Kolbens (33a) einen der Arbeitsräume (39, 40) mit einer Tankrückleitung (13) zu verbinden oder eine unidirektionale hydraulische Verbindung zwischen den Arbeitsräumen (39, 40) zu schalten, um im Fehlerfalle eine Rückstellbewegung der Kolbenstange (33) in die Mittelstellung zu ermöglichen.

3. Hydraulische Hinterachslenkung nach Anspruch 2, mit einem stromlos geöffneten Absperrventil (27), welches im Normalbetrieb der Hinterachslenkung die hydraulische Verbindung zwischen den Arbeitsräumen (39, 40) oder zu einer Tankrückleitung (13) sperrt und zur Deaktivierung der Hinterachslenkung oder im Fehlerfall stromlos geschaltet wird und die hydraulische Verbindung zwischen den Arbeitsräumen (39, 40) bzw. die Tankrückleitung (13) freigibt.

4. Hydraulische Hinterachslenkung nach Anspruch 2 oder 3, bei der das mechanisch schaltbare Ventil (26) als Umschaltventil mit drei Schaltstellungen ausgebildet ist, zwischen denen es über einen umgestalteten Bereich (41) der Kolbenstange (33) in Abhängigkeit der Kolbenposition geschaltet wird, wobei das Umschaltventil (26) in einer ersten Schaltstellung einen der Arbeitsräume (39) mit der Tankrückleitung (13) verbindet, in einer zweiten Schaltstellung die Verbindung zwischen den beiden Arbeitsräumen (39, 40) und der Tankrückleitung (13) sperrt und in einer dritten Schaltstellung den anderen Arbeitsraum (40) mit der Tankrückleitung (13) verbindet.

5. Hydraulische Hinterachslenkung nach Anspruch 2 oder 3, mit zumindest zwei mechanisch schaltbaren Ventilen (43, 44; 43', 44'), insbesondere mechanisch entsperrbaren Rückschlagventilen, wobei das Verriegelungselement (34, 35) zwischen der ersten Entsperrstellung, der Sperrstellung und einer zweiten Entsperrstellung verstellbar ist und wobei ein erstes der mechanisch schaltbaren Ventile (43; 43') von dem Aktuator (37, 38, 45) geschaltet wird, wenn das Verriegelungselement (34, 35) in seine erste Entsperrstellung verstellt wird und ein zweites der mechanisch schaltbaren Ventile (44, 44') von dem Aktuator (37, 38, 45) geschaltet wird, wenn das Verriegelungselement (34, 35) in seine zweite Entsperrstellung verstellt wird.

6. Hydraulische Hinterachslenkung nach einem der vorangehenden Ansprüche, bei der das Verriegelungselement (34, 35) mittels einer oder mehrerer Rückstellfedern in Richtung seiner Sperrstellung federbelastet ist.

7. Hydraulische Hinterachslenkung nach einem der vorangehenden Ansprüche, bei der die Kolbenstange (33) einen sich durch den Kolben (33a) erstreckenden Hohlraum aufweist, und die Sperrvorrichtung (34, 35, 36, 36') innerhalb des Hohlraums der Kolbenstange (33) angeordnet ist.

8. Hydraulische Hinterachslenkung nach Anspruch 7 mit einem von einem Endstück (30a) des Lenkzylinders in dessen Zylinderraum ragenden Innenrohr (30b), das sich bis in den Hohlraum der Kolbenstange (33) erstreckt

9. Hydraulische Hinterachslenkung nach Anspruch 8, bei der das Verriegelungselement (34, 35) als eine innerhalb des Innenrohres (30b) längsbewegliche Hülse (34) ausgebildet ist, die in einem Endbereich einen als Verriegelungsraste dienenden Ringwulst (35) trägt, welcher in der Sperrstellung das mindestens eine Sperrglied (36, 36') in der Einrastposition (42) hält.

10. Hydraulische Hinterachslenkung nach einem der Ansprüche 7 bis 9, bei der als Sperrglied (36) eine Mehrzahl umfangsverteilt angeordneter Federzungen vorgesehen sind, die an ihrem Ende jeweils eine Rastnase tragen, welche in einer Ausnehmung, insbesondere einer Ringnut (42) an der Innenseite des Hohlraums der Kolbenstange (33) einrasten.

11. Hydraulische Hinterachslenkung nach einem der vorangehenden Ansprüche, bei der die hydraulisch entsperrbaren Ventile (15, 17) als Überdruckventile ausgebildet sind, die bei Überschreiten eines an einem mit dem jeweiligen Arbeitsraum (39, 40) verbundenen Mediumanschluss anliegenden Maximaldruckwertes öffnen, wobei der Maximaldruckwert über dem ersten und dem zweiten Druckwert liegt.

12. Hydraulische Hinterachslenkung nach einem der vorangehenden Ansprüche, bei der eine Verstellung des Verriegelungselements (34, 35) außerhalb der Mittelstellung des Kolbens (33a) durch das in seiner den Kolben (33a) freigebenden Stellung befindliche Sperrglied (36, 36') blockiert wird.

13. Hydraulische Hinterachslenkung nach einem der vorangehenden Ansprüche, mit einer Pumpe (3) zur wahlweisen Druckbeaufschlagung eines der Arbeitsräume (39, 40) des Lenkzylinders (30) mit einem Hydraulikmedium zwecks Auslenkung des Kolbens (33a) in die eine oder die andere Richtung, wobei die Pumpe (3) vorzugsweise als reversierbare Pumpe ausgebildet ist, die zur Auslenkung des Kolbens (33a) in unterschiedliche Richtungen in entgegengesetztem Drehsinn angetrieben wird.

14. Hydraulische Hinterachslenkung nach dem Oberbegriff des Anspruchs 1, insbesondere nach einem der vorangehenden Ansprüche, bei dem das Sperrglied (36, 36') mit einer Ausnehmung (42), welche die Einrastposition für das Sperrglied (36, 36') bildet, mit Spiel in Eingriff steht, indem die Ausnehmung (42) gegenüber dem Sperrglied (36, 36') ein Übermaß aufweist, wobei das Übermaß so bemessen ist, dass ein sich aufgrund der Übermaßes ergebender Lenkausschlag kleiner ist, als ein vorgegebener, maximaler zulässiger Winkelfehler.

## Claims

1. Hydraulic rear axle steering mechanism for multi-axle vehicles,
having a steering cylinder (30) which comprises a cylinder chamber, a piston (33a) mounted in a sealing manner in the cylinder chamber, which piston divides the cylinder chamber into two working chambers (39, 40), and at least one piston rod (33) supported by the piston (33a),
wherein the steering cylinder (30) is provided with a mechanical blocking device (34, 35, 36, 36') which locks the piston (33a) once it reaches a central position within the steering cylinder (30),
wherein the blocking device (34, 35, 36, 36') has at least one blocking member (36, 36') which in the blocked state is held by a locking element (34, 35) in an engaged position (42), and
wherein the locking element (34, 35) is adjustable, by means of an actuator (37, 38, 45) which is actuated hydraulically and is separate from the piston (33a) and piston rod (33), between a blocking position in which the locking element (34, 35) holds the blocking member (36, 36') in the engaged position (42), and at least one first unblocking position in which the locking element (34, 35) releases the blocking member (36, 36'),
**characterised in that** a return line from each of the two working chambers (39, 40) leads to a tank (7) and a hydraulically unblockable valve (15, 17), in particular a load-holding valve, is arranged in each of the return lines, **in that**
the hydraulically unblockable valves (15, 17) are designed as admission pressure-controlled valves whose control connection is connected in each case to a pressure line (11, 12) leading (34, 35, 36, 36') from a pump (3) to the respective other working chamber (39, 40), and **in that**
the hydraulically actuated actuator (37, 38, 45) is configured such that, when a first pressure value is applied, the locking element (34, 35) moves into the unblocking position and the admission pressure-controlled valves (15, 17) are configured such that, when a second pressure value is applied, they open at the control connection, wherein the second pressure value is higher than the first pressure value.

2. Hydraulic rear axle steering mechanism according to claim 1, having at least one mechanically switchable valve (26; 43, 44; 43', 44') which is coupled mechanically to the piston rod (33) or the locking element (34, 35) in order to connect, depending on the deflection of the piston (33a), one of the working chambers (39, 40) to a tank return line (13) or to switch a unidirectional hydraulic connection between the working chambers (39, 40) in order to enable, in the event of a fault, a return movement of the piston rod (33) into the central position.

3. Hydraulic rear axle steering mechanism according to claim 2, having a shut-off valve (27) which is opened without current and which, in normal operation of the rear axle steering mechanism, blocks the hydraulic connection between the working chambers (39, 40) or to a tank return line (13) and is switched without current to deactivate the rear axle steering mechanism or in the event of a fault and releases the hydraulic connection between the working chambers (39, 40) or the tank return line (13).

4. Hydraulic rear axle steering mechanism according to claim 2 or 3, wherein the mechanically switchable valve (26) is designed as a switch-over valve with three switching positions, between which the mechanically switchable valve is switched via a modified region (41) of the piston rod (33) depending on the position of the piston, wherein the switch-over valve (26) in a first switching position connects one of the working chambers (39) to the tank return line (13), in a second switching position blocks the connection between the two working chambers (39, 40) and the tank return line (13), and in a third switching position connects the other working chamber (40) to the tank return line (13).

5. Hydraulic rear axle steering mechanism according to claim 2 or 3, having at least two mechanically switchable valves (43, 44; 43', 44'), in particular mechanically unblockable check valves, wherein the locking element (34, 35) is movable between the first unblocking position, the blocking position and a second unblocking position and wherein a first of the mechanical switchable valves (43; 43') is switched by the actuator (37, 38, 45) when the locking element (34, 35) is moved into its first unblocking position, and a second of the mechanically switchable valves (44, 44') is switched by the actuator (37, 38, 45) when the locking element (34, 35) is moved into its second unblocking position.

6. Hydraulic rear axle steering mechanism according to any one of the preceding claims, wherein the locking element (34, 35) is spring-loaded in the direction of its blocking position by one or more return springs.

7. Hydraulic rear axle steering mechanism according to any one of the preceding claims, wherein the piston rod (33) has a hollow space extending through the piston (33a), and the blocking device (34, 35, 36, 36') is arranged inside the hollow space of the piston rod (33).

8. Hydraulic rear axle steering mechanism according to claim 7, having an internal pipe (30b) which projects from an end piece (30a) of the steering cylinder into its cylinder chamber and which extends into the hollow space of the piston rod (33).

9. Hydraulic rear axle steering mechanism according to claim 8, wherein the locking element (34, 35) is designed as a sleeve (34) which is longitudinally movable inside the internal pipe (30b) and which, in an end region, supports an annular bead (35) which serves as a locking notch and which in the blocking position holds the at least one blocking member (36, 36') in the engaged position (42).

10. Hydraulic rear axle steering mechanism according to any one of claims 7 to 9, wherein a plurality of spring tongues arranged in a circumferentially distributed manner are provided as the blocking member (36), which spring tongues, at the end thereof, each support a snap-in nose which engages in a recess, in particular an annular groove (42), on the inner side of the hollow space of the piston rod (33).

11. Hydraulic rear axle steering mechanism according to any one of the preceding claims, wherein the hydraulically unblockable valves (15,17) are designed as overpressure valves which open when a maximum pressure value present at a medium connection connected to the respective working chamber (39, 40) is exceeded, wherein the maximum pressure value lies above the first and the second pressure value.

12. Hydraulic rear axle steering mechanism according to any one of the preceding claims, wherein a movement of the locking element (34, 35) outside the central position of the piston (33a) is blocked by the blocking member (36, 36') located in its position which releases the piston (33a).

13. Hydraulic rear axle steering mechanism according to any one of the preceding claims, having a pump (3) for optional pressurisation of one of the working chambers (39, 40) of the steering cylinder (30) with a hydraulic medium for the purpose of deflecting the piston (33a) in one or the other direction, wherein the pump (3) is preferably designed as a reversible pump which is driven in the opposite direction of rotation in order to deflect the piston (33a) in different directions.

14. Hydraulic rear axle steering mechanism according to the preamble of claim 1, in particular according to any one of the preceding claims, wherein the blocking member (36, 36') is engaged with play with a recess (42) which forms the engaged position for the blocking member (36, 36'), due to the recess (42) having an oversize compared with the blocking member (36, 36'), wherein the oversize is dimensioned such that a steering angle resulting due to the oversize is smaller than a predefined maximum permissible angular error.

## Revendications

1. Direction hydraulique d'essieu arrière pour des véhicules à plusieurs essieux,
avec un vérin de direction (30) qui comprend un espace de vérin, un piston (33a) logé de manière étanche dans l'espace de vérin, piston qui divise l'espace de vérin en deux espaces de travail (39, 40), et au moins une tige de piston (33) portée par le piston (33a),
dans laquelle le vérin de direction (30) est pourvu d'un dispositif de blocage (34, 35, 36, 36') mécanique qui arrête le piston (33a) lorsqu'il atteint une position centrale à l'intérieur du vérin de direction (30),
dans laquelle le dispositif de blocage (34, 35, 36, 36') présente au moins un organe de blocage (36, 36') qui est maintenu dans l'état bloqué par un élément de verrouillage (34, 35) dans une position d'encliquetage (42), et
dans laquelle l'élément de verrouillage (34, 35) est déplaçable par le biais d'un actionneur (37, 38, 45) actionné de manière hydraulique, séparé du piston (33a) et de la tige de piston (33) entre une position de blocage dans laquelle l'élément de verrouillage (34, 35) maintient l'organe de blocage (36, 36') dans la position d'encliquetage (42) et au moins une première position de déblocage dans laquelle l'élément de verrouillage (34, 35) libère l'organe de blocage (36, 36'),
**caractérisée en ce que** respectivement une conduite de retour de chacun des deux espaces de travail (39, 40) mène à un réservoir (7) et une soupape (15, 17) déblocable de manière hydraulique, en particulier soupape de maintien de charge, est agencée dans chacune des conduites de retour, **en ce que**
les soupapes (15, 17) déblocables de manière hydraulique sont réalisées comme soupapes commandées par une pression d'entrée, dont le raccord de commande est relié respectivement à une conduite de pression (11, 12) menant d'une pompe (3) à l'autre espace de travail (39, 40) respectif, et **en ce que**
l'actionneur (37, 38, 45) actionné de manière hydraulique est réglé de sorte qu'il déplace l'élément de verrouillage (34, 35) dans la position de déverrouillage lors de l'application d'une première valeur de pression et les soupapes (15, 17) commandées par une pression d'entrée sont réglées de sorte qu'elles s'ouvrent au niveau de la borne de commande lors de l'application d'une seconde valeur de pression, dans laquelle la seconde valeur de pression est supérieure à la première valeur de pression.

2. Direction hydraulique d'essieu arrière selon la revendication 1, avec au moins une soupape (26 ; 43, 44 ; 43', 44') commutable mécaniquement qui est couplée mécaniquement à la tige de piston (33) ou à l'élément de verrouillage (34, 35) afin de relier, en fonction de l'orientation du piston (33a), l'un des espaces de travail (39, 40) à une conduite de retour de réservoir (13) ou de commuter une liaison hydraulique unidirectionnelle entre les espaces de travail (39, 40) afin de permettre un mouvement de rappel de la tige de piston (33) dans la position centrale en cas d'erreur.

3. Direction hydraulique d'essieu arrière selon la revendication 2, avec une soupape de blocage (27) ouverte sans courant qui bloque, lors du fonctionnement normal de la direction d'essieu arrière, la liaison hydraulique entre les espaces de travail (39, 40) ou vers une conduite de retour de réservoir (13) et est commutée sans courant pour la désactivation de la direction d'essieu arrière ou en cas d'erreur et libère la liaison hydraulique entre les espaces de travail (39, 40) ou la conduite de retour de réservoir (13).

4. Direction hydraulique d'essieu arrière selon la revendication 2 ou 3, pour laquelle la soupape (26) commutable mécaniquement est réalisée comme soupape de commutation avec trois positions de commutation entre lesquelles elle est commutée par le biais d'une zone (41) modifiée de la tige de piston (33) en fonction de la position de piston, dans laquelle la soupape de commutation (26) relie dans une première position de commutation l'un des espaces de travail (39) à la conduite de retour de réservoir (13), bloque dans une deuxième position de commutation la liaison entre les deux espaces de travail (39, 40) et la conduite de retour de réservoir (13) et relie dans une troisième position de commutation l'autre espace de travail (40) à la conduite de retour de réservoir (13).

5. Direction hydraulique d'essieu arrière selon la revendication 2 ou 3 avec au moins deux soupapes (43, 44 ; 43', 44') commutables mécaniquement, en particulier des clapets antiretour déverrouillables mécaniquement, dans laquelle l'élément de verrouillage (34, 35) est déplaçable entre la première position de déverrouillage, la position de verrouillage et une seconde position de déverrouillage et dans laquelle une première des soupapes (43 ; 43') commutables mécaniquement est commutée par l'actionneur (37, 38, 45) lorsque l'élément de verrouillage (34, 35) est déplacé dans sa première position de déverrouillage et une seconde des soupapes (44, 44') commutables mécaniquement est commutée par l'actionneur (37, 38, 45) lorsque l'élément de verrouillage (34, 35) est déplacé dans sa seconde position de déverrouillage.

6. Direction hydraulique d'essieu arrière selon l'une quelconque des revendications précédentes, pour laquelle l'élément de verrouillage (34, 35) est sollicité par ressort au moyen d'un ou de plusieurs ressorts de rappel en direction de sa position de verrouillage.

7. Direction hydraulique d'essieu arrière selon l'une quelconque des revendications précédentes pour laquelle la tige de piston (33) présente un espace creux s'étendant à travers le piston (33a), et le dispositif de blocage (34, 35, 36, 36') est agencé à l'intérieur de l'espace creux de la tige de piston (33).

8. Direction hydraulique d'essieu arrière selon la revendication 7 avec un tube intérieur (30b) dépassant d'un embout (30a) du vérin de direction dans son espace de vérin, tube qui s'étend jusque dans l'espace creux de la tige de piston (33).

9. Direction hydraulique d'essieu arrière selon la revendication 8 pour laquelle l'élément de verrouillage (34, 35) est réalisé comme une douille (34) déplaçable longitudinalement à l'intérieur du tube intérieur (30b), douille qui porte dans une zone d'extrémité un bourrelet annulaire (35) servant de cran de verrouillage qui maintient dans la position de verrouillage l'au moins un organe de verrouillage (36, 36') dans la position d'encliquetage (42).

10. Direction hydraulique d'essieu arrière selon l'une quelconque des revendications 7 à 9 pour laquelle une pluralité de languettes de ressort agencées de manière répartie sur la périphérie sont prévues comme organe de verrouillage (36), languettes qui portent à leur extrémité respectivement un nez d'encliquetage qui s'encliquète dans un évidement, en particulier une rainure annulaire (42), au niveau du côté intérieur de l'espace creux de la tige de piston (33).

11. Direction hydraulique d'essieu arrière selon l'une quelconque des revendications précédentes pour laquelle les soupapes (15, 17) déverrouillables de manière hydraulique sont réalisées comme soupapes de surpression qui s'ouvrent en cas de dépassement d'une valeur de pression maximale appliquée à un raccord de milieu relié à l'espace de travail (39, 40) respectif, dans laquelle la valeur de pression maximale se trouve au-dessus de la première et de la seconde valeur de pression.

12. Direction hydraulique d'essieu arrière selon l'une quelconque des revendications précédentes pour laquelle un déplacement de l'élément de verrouillage (34, 35) en dehors de la position centrale du piston (33a) est bloqué par l'organe de verrouillage (36, 36') se trouvant dans sa position libérant le piston (33a).

13. Direction hydraulique d'essieu arrière selon l'une quelconque des revendications précédentes avec une pompe (3) pour une pressurisation au choix d'un des espaces de travail (39, 40) du vérin de direction (30) en un milieu hydraulique en vue de l'orientation du piston (33a) dans l'une ou l'autre direction, dans laquelle la pompe (3) est de préférence réalisée comme pompe réversible qui est entraînée pour l'orientation du piston (33a) dans différentes directions dans le sens de rotation inverse.

14. Direction hydraulique d'essieu arrière selon le préambule de la revendication 1, en particulier selon l'une quelconque des revendications précédentes, pour laquelle l'organe de verrouillage (36, 36') est en prise avec jeu avec un évidement (42) qui forme la position d'encliquetage pour l'organe de verrouillage (36, 36'), en ce que l'évidement (42) présente par rapport à l'organe de verrouillage (36, 36') un surdimensionnement, dans laquelle le surdimensionnement est mesuré de sorte qu'un angle de braquage résultant de la surcote soit plus petit qu'une erreur angulaire prédéfinie autorisée au maximum.
